# EUROPEAN PATENT SPECIFICATION

(11) **EP 2 983 349 B1**
(45) Date of publication and mention of the grant of the patent: **28.03.2018**
(21) Application number: 15177817.2
(22) Date of filing: 22.07.2015
(51) Int. Cl.: H04N 1/00, H04L 12/26, H04L 12/12

(54) **COMMUNICATION APPARATUS AND CONTROL METHOD THEREFOR**
KOMMUNIKATIONSVORRICHTUNG UND STEUERUNGSVERFAHREN DAFÜR
APPAREIL DE COMMUNICATION ET SON PROCÉDÉ DE COMMANDE CORRESPONDANT

(30) Priority: 04.08.2014 JP 2014158988; 04.08.2014 JP 2014158989
(43) Date of publication of application: 10.02.2016
(73) Proprietor: Canon Kabushiki Kaisha, Tokyo 146-8501 (JP)
(72) Inventor: FUKUSHIMA, Michio, Tokyo 146-8501 (JP); OHARA, Eiji, Tokyo 146-8501 (JP); SUGA, Daisuke, Tokyo 146-8501 (JP)
(74) Representative: TBK

(56) References cited:
- US-A1- 2003 117 661
- US-A1- 2006 215 229
- US-A1- 2012 229 840
- US-A1- 2013 083 910
- US-A1- 2014 043 637

## Description

### BACKGROUND OF THE INVENTION

### Field of the Invention

The present invention relates to a communication apparatus, and a control method therefor.

### Description of the Related Art

In recent years, a communication apparatus is desired to further reduce its power consumption. To further reduce the power consumption of the communication apparatus, in addition to reducing the standby power, the power consumption is significantly reduced when the communication apparatus is not connected to a network via a LAN or telephone line and has not been used for a given time. For example, Japanese Patent Laid-Open No. 2006-254384 describes a technique in which an image forming apparatus connected to a network detects a connection state with the network and powers on/off a network function based on the detection result.

In the environmental directive (Lot 26) in Europe, such power management is considered essential, and will be regulated in the near future. Lot 26 prescribes that the power consumption should be 0.5 W or less when all wireless network ports stop and connections of all wired network ports are disconnected (an apparatus is not connected to any network physically or logically).

Based on this background, an apparatus which detects a connection to a network, and performs power management if it is not connected to the network has become widespread.
Furthermore, for example, to achieve the target value 0.5 W of the power consumption prescribed by Lot 26, it is considered to power off the overall apparatus when it is not connected to the network physically or logically.

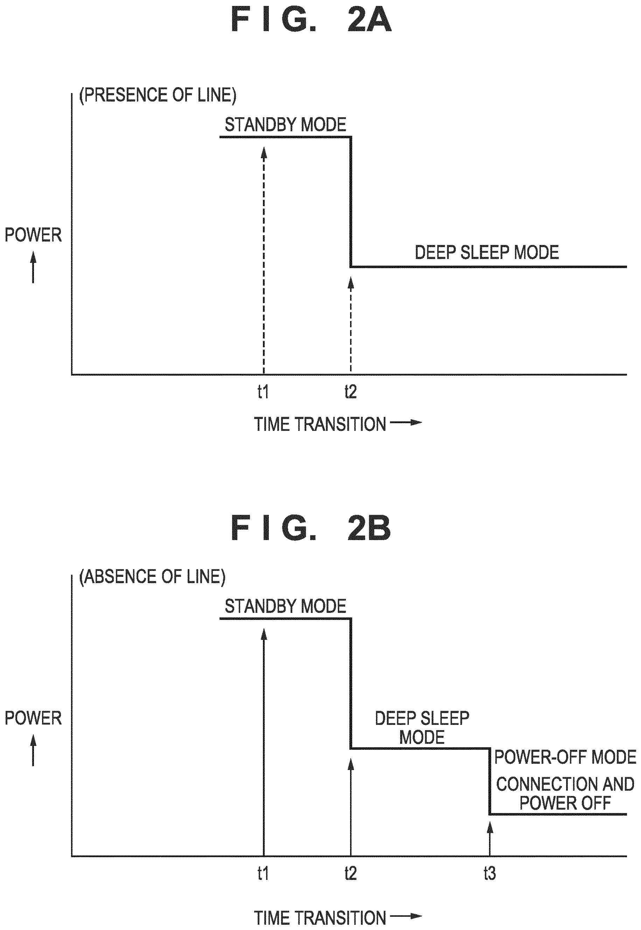

Figs. 2A and 2B are timing charts each showing an example of power transition of an image forming apparatus which is required by Lot 26. Fig. 2A shows time transition of power management when the apparatus is connected to a network or line. Fig. 2B shows time transition of power management when the apparatus is not connected to the network or line.

The apparatus shifts from a standby mode as a usable state to a deep sleep mode as one of sleep modes after a given time (at time t2). At this time, as shown in Fig. 2A, if the apparatus is connected to the line, it continues the deep sleep mode. On the other hand, as shown in Fig. 2B, when the apparatus is disconnected from the network or line at time t3, it shifts to a power-off mode of powering off itself. The deep sleep mode is a sleep mode of supplying power to only a minimum circuit which generates a factor for returning from the sleep state. As for an image forming apparatus, in the deep sleep mode, there are both a network for which a connection to the network can be confirmed and a network for which a connection to the network cannot be confirmed. Note that in Figs. 2A and 2B, the power consumption is estimated to be several tens of watts in the standby mode, several watts in the deep sleep mode, and almost zero watts in the power-off mode.

In the above-described example, when the apparatus is not connected to the network, it is necessary to determine whether to continue the deep sleep mode or shift to the power-off mode by confirming the connection state with the line. As described above, however, in the deep sleep mode, no power is supplied to components other than a circuit for detecting an incoming call. This imposes a problem that it is impossible to detect a connection to the network in the deep sleep mode. Therefore, even if the apparatus is disconnected from the network in the deep sleep mode, it is impossible to detect a connection to the network in the deep sleep mode, thereby disabling the apparatus from shifting to the power-off mode.

*Further prior art can be found in document* US 2006/215229 A1*, disclosing a facsimile device connected to a public line in parallel with an external telephone. The facsimile device includes a facsimile circuit configured to send and receive image data through the public line, a voltage detector that detects a voltage of the public line, a telephone status monitoring unit configured to judge whether the external telephone closes the public line based on the voltage of the public line detected by the voltage detector and a reference voltage, a monitoring operation control unit configured to keep the telephone status monitoring unit in an inactive state until a predetermined time elapses from a time when the facsimile circuit releases the public line, and to activate the telephone status monitoring unit if the predetermined time elapses from the time when the facsimile circuit releases the public line.*

It is an object of the present invention to solve the above problem with the conventional technique.

### SUMMARY OF THE INVENTION

The present invention has as its feature to provide a technique capable of decreasing the number of times an apparatus returns from the sleep mode, confirming a connection to a line, and shifting the apparatus to the power-off mode only when the apparatus is not connected to the line.

According to one aspect of the present invention, there is provided a communication apparatus according to claims 1 to 9.

According to *another* aspect of the present invention, there is provided a control method for a communication apparatus according to claim *10*.

According to the present invention, it is possible to decrease the number of times an apparatus returns from the sleep mode, confirm a connection to a line, and shift the apparatus to the power-off mode only when the apparatus is not connected to the line.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram for explaining the arrangement of an image forming apparatus according to the first embodiment;
Figs. 2A and 2B are timing charts for explaining power transition of an image forming apparatus which is required by Lot 26;
Fig. 3 is a timing chart showing an example of the line voltage of a communication line according to the first embodiment;
Fig. 4 is a block diagram for explaining power supply within the image forming apparatus according to the first embodiment;
Fig. 5 is a table for explaining state transition of the power supply outputs of a power supply circuit according to the first embodiment;
Fig. 6 is a flowchart for explaining the processing of the image forming apparatus according to the first embodiment;
Fig. 7 is a timing chart for explaining an example of transition of the power consumption of the image forming apparatus according to the first embodiment;
Fig. 8 is a flowchart for explaining the processing of an image forming apparatus according to the second embodiment;
Figs. 9A and 9B are flowcharts for explaining the processing of an image forming apparatus according to the third embodiment wherein Fig. 9A shows processing by a CPU and Fig. 9B shows processing by an I/F unit;
Fig. 10 is a timing chart showing an example of power transition of the image forming apparatus according to the third embodiment;
Fig. 11 is a flowchart for explaining the processing of an image forming apparatus according to the fourth embodiment;
Fig. 12 is a block diagram for explaining the arrangement of a facsimile apparatus according to the sixth embodiment;
Fig. 13 is a timing chart for explaining an example of time transition of power management according to the result of detecting the connection of a digital multifunction peripheral to a telephone line;
Fig. 14 is a timing chart showing an example of a change in line voltage of a communication line when the facsimile apparatus captures a line according to the sixth embodiment;
Fig. 15 is a schematic block diagram for explaining the DC capture operation of the facsimile apparatus according to the sixth embodiment;
Fig. 16 is a block diagram for explaining power supply in the facsimile apparatus according to the sixth embodiment;
Fig. 17 is a table for explaining state transition of the power supply outputs of a power supply circuit in correspondence with the state of the facsimile apparatus according to the sixth embodiment;
Figs. 18 and 19 are flowcharts for explaining transition of the operation state of the facsimile apparatus according to the sixth embodiment;
Figs. 20A and 20B are flowcharts for explaining processing when the facsimile apparatus shifts to the sleep mode in step S1916 of Fig. 19;
Fig. 21 is a timing chart showing an example of power transition of the facsimile apparatus according to the sixth embodiment; and
Fig. 22 is a timing chart showing another example of power transition of the facsimile apparatus according to the sixth embodiment.

### DESCRIPTION OF THE EMBODIMENTS

Hereinafter, embodiments of the present invention will be described in detail with reference to the accompanying drawings. It should be noted that the following embodiments are not intended to limit the scope of the appended claims, and that not all the combinations of features described in the embodiments are necessarily essential to the solving means of the present invention. Note that in the embodiments to be described below, an image forming apparatus such as a multifunction peripheral will be exemplified as a communication apparatus according to the present invention. However, the present invention is not limited to this.

### First Embodiment

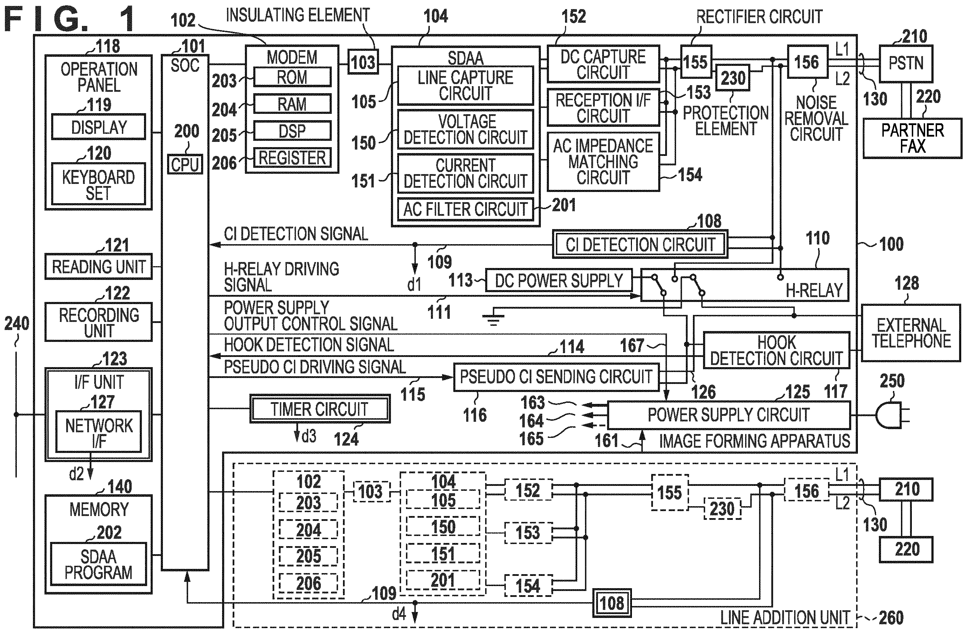

Fig. 1 is a block diagram for explaining the arrangement of an image forming apparatus 100 according to the first embodiment of the present invention.

A system-on-chip (SOC) 101 includes a CPU 200 and controls the overall operation of the image forming apparatus 100. A memory 140 is connected to the SOC 101, functions as a main storage device accessible by the CPU 200, and is used as a work memory of the CPU 200 and a memory for storing control programs. The memory 140 is also used as a memory for temporarily storing image data and various kinds of information at the time of facsimile transmission or reception, and used to store information set by the user. An SDAA program 202 is a program to be executed by a DSP 205 of a modem 102, and is transferred to the modem 102, loaded into a RAM 204, and then executed by the DSP 205.

An operation panel 118, a reading unit 121, a recording unit 122, and an I/F unit 123 are connected to the SOC 101. The operation panel 118 includes a display 119 and a keyboard set 120, which serve as a user interface. The display 119 displays the state, menu, and the like of the apparatus. The keyboard set 120 includes a ten-key pad and buttons for accepting various instructions input from the user. The user can input user setting information using this keyboard. The reading unit 121 reads an image of a document, and generates image data. The generated image data may undergo facsimile transmission to a partner apparatus via a communication line 130, or may be printed by the recording unit 122. The I/F unit 123 functions as an interface for connecting various information devices. The I/F unit 123 includes, for example, a network I/F 127, and is connected to a LAN (Local Area Network) 240. A connection to the network I/F 127 is confirmed by confirming the states of a transmission path and connection destination and determining whether data transmission/reception is possible in the data link layer of the basic protocol of the network. The network I/F 127 functions as a LAN controller, and transmits/receives data to/from, for example, an external gateway by a CSMA/CD (Carrier Sense Multiple Access/Collision Detection) communication scheme.

The modem 102 is a modulator/demodulator which includes a ROM 203, the RAM 204, the DSP 205, and a register 206 and operates under the control of the SOC 101. The modem 102 executes modulation processing using image data which has been read by the reading unit 121 and is to undergo facsimile transmission, and demodulation processing of a signal received via the communication line 130. The modem 102 is connected to an SDAA (that is, Silicon Data Access Arrangement) 104 via an isolating element 103. The ROM 203 stores programs to be executed by the DSP 205. The SDAA program 202 transferred from a host and the programs stored in the ROM 203 are loaded into the RAM 204, and executed by the DSP 205. The DSP 205 executes the program loaded into the RAM 204 to control the operation of the modem 102. The register 206 stores the state of the SDAA 104 or an instruction from the SOC 101.

The SDAA 104 is a semiconductor NCU (Network Control Unit) as an example of a circuit for executing network control, and includes a line capture circuit 105, a voltage detection circuit 150, a current detection circuit 151, and an AC filter circuit 201. The SDAA 104 is a network controller, which is connected to the communication line 130, and functions as an interface between the image forming apparatus 100 and external communication line 130. When performing communication with a partner apparatus via the communication line 130, the SDAA 104 controls the connection (capture) state of the line. A telephone 128 which is externally attached to the image forming apparatus 100 is also connected to the communication line 130. The telephone 128 is connected to the communication line 130 via an H-relay 110, and the SDAA 104 is connected to the communication line 130 in parallel to the telephone 128. The SDAA 104 not only captures the line to control communication when performing facsimile transmission/reception, but also controls the capture state of the line when the telephone 128 is used to perform voice communication with the partner apparatus via the communication line 130. The SDAA 104 executes these control operations under the control of the SOC 101.

The SDAA 104 controls the DC capture state of the line using the line capture circuit 105. DC impedance when the line capture circuit 105 performs a DC capture operation is variable. This impedance is obtained based on the preset current characteristic (to be referred to as the DC-VI characteristic) with respect to DC voltage. The voltage detection circuit 150 is a circuit for monitoring the voltage on the communication line 130. The current detection circuit 151 is a circuit for monitoring the current on the communication line 130. The AC filter circuit 201 is connected to the preceding stage of the voltage detection circuit 150 or current detection circuit 151, and prevents a detection error by removing an AC component when detecting the DC voltage or current.

A DC capture circuit 152 is a peripheral circuit of the SDAA 104, and adjusts the DC impedance under the control of the SDAA 104 while performing a DC capture operation by adjusting the current of a current source. The DC capture circuit 152 is also used to generate a line open state and send a dial pulse as a kind of a selection signal for the line. The rectifier circuit 155 includes a diode bridge, and rectifies a signal from the communication line 130 and transmits it to the SDAA 104. A reception I/F circuit 153 is an interface circuit for receiving a facsimile reception signal received via the communication line 130. An AC impedance matching circuit 154 is a circuit for adjusting the AC impedance to 600 Ω in, for example, Japan. A noise removal circuit 156 suppresses a lightning surge, electromagnetic noise, and the like from the communication line 130, and prevents noise of the image forming apparatus 100 from being sent via the communication line 130.

A CI detection circuit 108 is connected to the communication line 130, and detects a calling signal (to be referred to as a CI signal hereinafter) received from the communication line 130. Upon detecting a CI signal from the communication line, the CI detection circuit 108 supplies a CI detection signal 109 indicating it to the SOC 101. Based on the CI detection signal 109, the SOC 101 can determine whether a CI signal has been received from the communication line 130.

The H-relay 110 connects, to either a DC power supply 113 or the communication line 130, the external telephone 128 connected via a hook detection circuit 117. The H-relay 110 switches between a connected state in which the external telephone 128 is connected to the communication line 130 and a disconnected state in which the external telephone 128 is disconnected from the communication line 130. The SOC 101 controls the H-relay 110 using an H-relay driving signal 111. Note that when the telephone 128 is disconnected from the communication line 130 by the H-relay 110, as shown in Fig. 1, even if a CI signal is received, the telephone 128 does not ring. The image forming apparatus 100 is set in a so-called non-ringing incoming call state. The DC power supply 113 supplies a current to the hook detection circuit 117.

The hook detection circuit 117 is connected to the telephone 128, and detects an off-hook or on-hook state of the telephone 128. The hook detection circuit 117 transmits the result of detecting the off-hook or on-hook state of the telephone 128 to the SOC 101 using a hook detection signal 114. The SOC 101 can determine the hook state of the telephone 128 based on the hook detection signal 114. The hook detection circuit 117 detects a current that flows to the telephone 128 in both a case in which the telephone 128 is connected directly to the communication line 130 by the H-relay 110 and a case in which the telephone 128 is connected to the DC power supply 113. Then, the on-hook or off-hook state of the telephone 128 can be detected.

A pseudo CI sending circuit 116 sends a pseudo CI signal 126 to the telephone 128. The pseudo CI signal 126 is a signal to be sent to the telephone 128 disconnected from the communication line 130 so as to cause the telephone 128 to ring when a CI signal is received from a partner apparatus via the communication line 130. The pseudo CI sending circuit 116 sends the pseudo CI signal 126 to the telephone 128 in response to a sending instruction by a pseudo CI driving signal 115 from the SOC 101. A PSTN 210 is a public switched telephone network, and a partner FAX 220 is an image forming apparatus serving as a partner apparatus connected via the PSTN 210. A protection element 230 is a current protection element including a fuse.

A timer circuit 124 is connected to the SOC 101, and measures a preset time. The SOC 101 controls setting and clearing of a time. The timer circuit 124 is operated by the first power supply system (to be described later), and outputs a power supply signal 161 to a power supply circuit 125 after shifting to the sleep mode (deep sleep mode). Before shifting to the deep sleep mode, the timer circuit 124 outputs a power supply signal to instruct a power supply system circuit instructed by the CPU 200 to supply power. The time set in the timer circuit 124 is a time from when the apparatus shifts to the deep sleep mode until it returns from the deep sleep mode to confirm the connection to the network, and is normally about 20 min. Other times may be set.

The power supply circuit 125 is a circuit for generating power to be supplied to a circuit block within the image forming apparatus 100. An AC voltage of 100 V is supplied from a power supply plug 250 to generate, for example, power supply outputs 163 to 165 of a plurality of systems.

In this embodiment, a power supply system necessary to return from the sleep state is the first power supply system. The first power supply system includes, for example, the CI detection circuit 108, hook detection circuit 117, and power supply circuit 125. Power supply systems necessary for standby are the second and third power supply systems. The second power supply system includes circuits other than the first power supply system of the image forming apparatus 100, the SOC 101, the modem 102, and the SDAA 104. The third power supply system includes a line addition unit 260. Referring to Fig. 1, the first power supply system is supplied with the power supply output 163 and indicated by double lines, and includes the CI detection circuit 108, hook detection circuit 117, I/F unit 123, timer circuit 124, and power supply circuit 125. The second power supply system is supplied with the power supply output 164 and indicated by solid lines in Fig. 1. The third power supply system is supplied with the power supply output 165 and indicated by broken lines in Fig. 1, and includes the circuits of the line addition unit 260.

Note that the power supply circuit 125 performs the output control of the power supply outputs 163 to 165 using control signals d1, d2, d3, and d4 from the circuits of the first power supply system and a control signal c from the SOC 101. The control signal d1 is the CI detection signal 109 when a CI signal is detected. The control signal d2 is an incoming call signal detected by the network I/F 127. The control signal d3 is a detection signal which is output from the timer circuit 124 and indicates a lapse of a predetermined time. The control signals d1, d2, d3, and d4 are ORed, and supplied as the interrupt signal 161 to the power supply circuit 125.

The line addition unit 260 is a unit which is additionally attached to the image forming apparatus 100 and can add a facsimile line for the image forming apparatus 100.

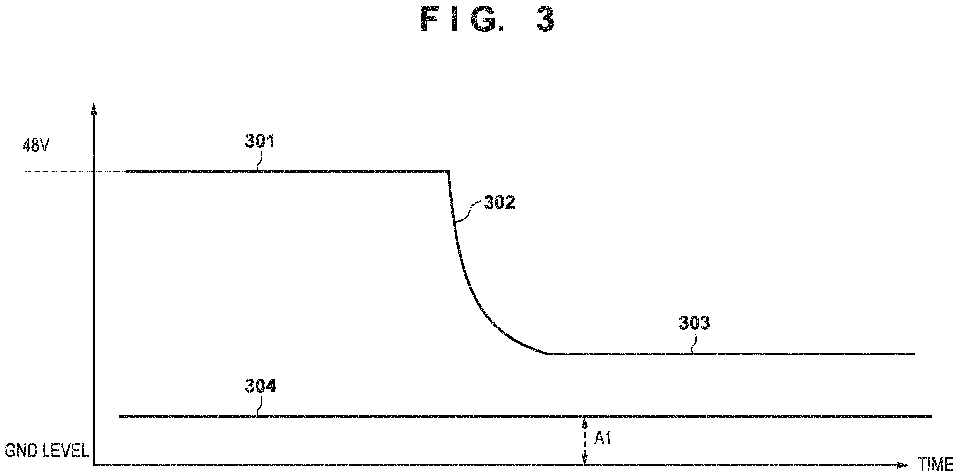

Fig. 3 is a timing chart showing an example of the line voltage of the communication line 130 according to the first embodiment.

In 301, the DC capture circuit 152 is in the on-hook state, that is, the DC capture circuit 152 is not in the DC capture state. At this time, the voltage value is about 48 V. A DC resistance value Z when seen from the PSTN 210 is 1 MΩ or more. In 302, an off-hook operation starts, and the DC capture circuit 152 adjusts the DC impedance under the control of the SDAA 104 while performing a DC capture operation by adjusting the current of a current source. At this time, the DC resistance of the PSTN 210 is about 50 to 550 Ω. A voltage drop which occurs along with an increase in current of the current source causes the line voltage to gradually drop. In 303, adjustment of the DC impedance ends, and the DC resistance value when seen from the PSTN 210 is adjusted to about 50 to 300 Ω upon performing off-hook. The voltage value 303 after adjustment of the DC impedance, that is, in the off-hook state largely drops since the current value is limited to 20 to 120 mA by the current limitation function of the PSTN 210. That is, for example, assume that a line current I is 60 mA and the DC resistance value Z when seen from the PSTN 210 is 300 Ω. In this case, the value of the line voltage is 18 V, that is, a voltage drop of about 30 V from about 48 V to 18 V occurs.

A case in which the communication line 130 is in the disconnected state will be described next. In this case, the communication line 130 is disconnected from the PSTN 210, and is not supplied with a voltage of 48 V from the PSTN 210, and the line voltage of the communication line 130 is held at almost 0 V. On the other hand, when the communication line 130 is connected to the PSTN 210 to perform a DC capture operation, the line voltage drops, as described above, but is held at a predetermined constant voltage. Therefore, for example, a setting value A1 of a threshold voltage 304 is set to about 3 V. If the line voltage is lower than 3 V, it can be determined that the communication line 130 is not supplied with a voltage of 48 V from the PSTN 210, that is, the communication line 130 is not connected to the PSTN 210, unlike an off-hook or on-hook operation.

The line voltage in a DC capture operation in which the communication line (to be referred to as a public line hereinafter) 210 is connected and the line voltage in the disconnected state in which the communication line 130 is not connected to the public line 210 have the above-described relationship.

Therefore, by monitoring the voltage of the communication line 130, it is possible to determine whether the communication line 130 is connected to the public line 210. However, this can be done by the voltage detection circuit 150 of the SDAA 104. That is, the setting value A1 of the threshold voltage 304 shown in Fig. 3 is held in advance in the register 206 of the modem 102. Therefore, the voltage value of the line voltage detected by the voltage detection circuit 150 of the SDAA 104 is compared with the setting value A1 of the threshold voltage. If the voltage value is smaller than the setting value A1 of the threshold voltage, a flag indicating that the communication line 130 is not connected to the PSTN 210 is held in the register 206. The CPU 200 of the SOC 101 determines connection or disconnection to/from the PSTN 210 by referring to the flag, and controls the operation of the image forming apparatus 100 according to the determination result.

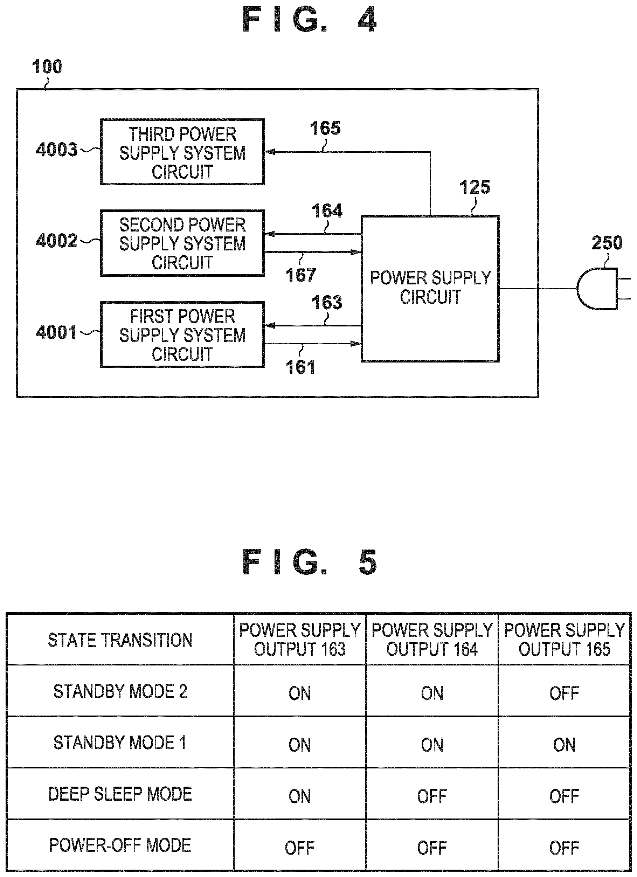

Fig. 4 is a block diagram for explaining power supply within the image forming apparatus 100 according to the first embodiment.

The power supply circuit 125 generates power supply voltages of a plurality of systems from a commercial AC voltage of 100 V supplied via the outlet 250, and supplies them to the circuits of the image forming apparatus 100 and the like. The power supply output 163 generated by the power supply circuit 125 is supplied to a first power supply system circuit 4001, the power supply output 164 is supplied to a second power supply system circuit 4002, and the power supply output 165 is supplied to a third power supply system circuit 4003. The first power supply system circuit 4001 indicates a circuit block which needs to be continuously supplied with power in the deep sleep mode. For example, the CI detection circuit 108 belongs to the first power supply system circuit 4001. When a CI signal is received from the communication line 130 in the deep sleep mode, the CI detection circuit 108 generates the interrupt signal d1 to return the apparatus from the deep sleep mode to the standby mode. The timer circuit 124 also belongs to the first power supply system circuit 4001. When the time set in the timer circuit 124 elapses, the timer circuit 124 generates the interrupt signal d3 to return the apparatus from the deep sleep mode to the standby mode. The network I/F 127 belongs to the first power supply system circuit 4001, and generates the interrupt signal d2 upon detecting the presence/absence of the connection of a network cable or upon receiving a packet destined for the image forming apparatus 100 via the LAN 240 in the deep sleep mode. This returns the apparatus from the deep sleep mode to the standby mode. As described above, the first power supply system circuit 4001 is a circuit for detecting a factor for returning from the deep sleep mode.

On the other hand, when a condition for shifting to the deep sleep mode is satisfied and the apparatus shifts to the deep sleep mode, power supply to the second power supply system circuit 4002 and third power supply system circuit 4003 is stopped. For example, most circuit blocks of the image forming apparatus 100 belong to the second power supply system circuit 4002 or third power supply system circuit 4003. The SOC 101, modem 102, SDAA 104, and the like belong to the second power supply system circuit 4002. Therefore, in the deep sleep mode, it is impossible to detect the connection to the public line 210. The reason why the circuit blocks are separated into the second power supply system circuit 4002 and third power supply system circuit 4003 is that power supply to the constituent circuits of the network is separated.

When shifting the image forming apparatus 100 from the standby mode to the deep sleep mode, the SOC 101 belonging to the second power supply system circuit 4002 supplies a power supply output control signal 167 to the power supply circuit 125. This stops the power supply outputs 164 and 165 generated by the power supply circuit 125, thereby shifting the apparatus to the deep sleep mode.

When shifting the apparatus from the standby mode to the power-off mode, the SOC 101 belonging to the second power supply system circuit 4002 supplies the power supply output control signal 167 to the power supply circuit 125. This stops all the power supply outputs 163 to 165 generated by the power supply circuit 125, thereby shifting the apparatus to the power-off mode.

When stopping only the third power supply system circuit 4003, the SOC 101 supplies the control signal 167 to the power supply circuit 125 to stop the power supply output 165 by the power supply circuit 125.

Fig. 5 is a table for explaining state transition of the power supply outputs of the power supply circuit 125 according to the first embodiment.

Fig. 5 shows the states of the power supply outputs of the power supply circuit 125 in each mode. In standby mode 2, the power supply outputs 163 and 164 are ON and the power supply output 165 is OFF. That is, power is supplied to the first power supply system circuit 4001 and second power supply system circuit 4002 and no power is supplied to the third power supply system circuit 4003. In standby mode 1, all the power supply outputs 163 to 165 are ON, and power is supplied to all of the first power supply system circuit 4001, second power supply system circuit 4002, and third power supply system circuit 4003. In the deep sleep mode, only the power supply output 163 is ON and power is supplied to only the first power supply system circuit 4001. In the power-off mode, all the power supply outputs 163 to 165 are OFF, and the user needs to manually turn on a power switch (not shown) to shift the apparatus to the standby mode.

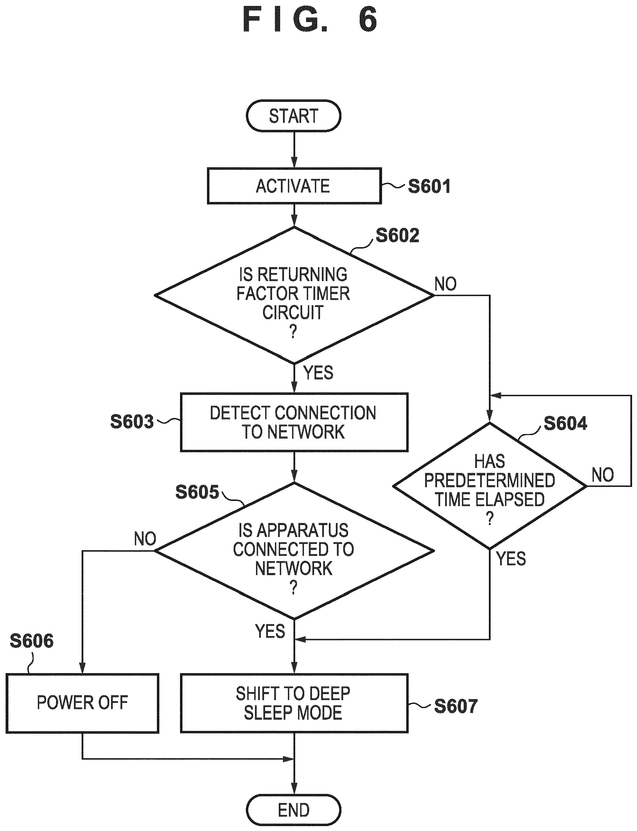

Fig. 6 is a flowchart for explaining the processing of the image forming apparatus 100 according to the first embodiment. A program for executing this processing is stored in the memory 140. When the CPU 200 reads out and executes the program, the processing shown in the flowchart is implemented.

This processing starts upon power-on of the apparatus or activation by time measurement by the timer. In step S601, the CPU 200 loads the program from the memory 140 and executes it, thereby activating the processing. The process advances to step S602, and the CPU 200 confirms whether the activation factor is an instruction from the timer circuit 124, by inquiring of the timer circuit 124 about it. If the CPU 200 determines in step S602 that the returning factor is the timer circuit 124, the process advances to step S603 to confirm the connection to the network. On the other hand, if the CPU 200 determines in step S602 that the returning factor is not the timer circuit 124, the process advances to step S604. In step S604, the CPU 200 confirms an elapsed time after the function of the image forming apparatus 100 is used. If a predetermined time has elapsed, the process advances to step S607, and the CPU 200 shifts the image forming apparatus 100 to the deep sleep mode, thereby terminating this processing.

On the other hand, the process advances to step S603 when the timer circuit 124 measures the time from when the apparatus shifts to the deep sleep mode until it returns, in order to confirm the connection to the network. Therefore, the CPU 200 detects the connection to the network. The process advances to step S605, and the CPU 200 determines whether the apparatus is connected to the network. If it is determined that the apparatus is connected to the network, the process advances to step S607 and the CPU 200 shifts the image forming apparatus 100 to the deep sleep mode, thereby terminating this processing. If the CPU 200 determines in step S605 that the apparatus is not connected to the network, the process advances to step S606, and the CPU 200 powers off the image forming apparatus 100, thereby terminating this processing.

As described above, if the time from when the apparatus shifts to the deep sleep mode until it returns is measured, the connection to the network is detected. If it is determined that the apparatus is connected to the network, the image forming apparatus 100 shifts to the deep sleep mode but is prevented from shifting to the power-off state. On the other hand, if it is determined that the apparatus is not connected to the network, the image forming apparatus 100 shifts to the power-off state.

With this processing, when the image forming apparatus 100 is disconnected from the network in the deep sleep mode, it can shift to the power-off mode after a predetermined time elapses.

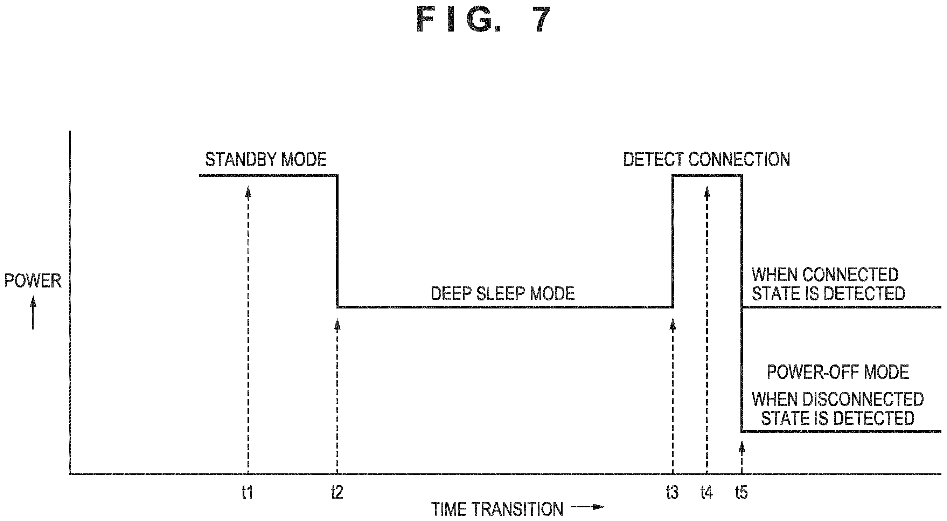

Fig. 7 is a timing chart for explaining an example of transition of the power consumption of the image forming apparatus 100 according to the first embodiment. Fig. 7 shows the time transition of power management when the apparatus is not connected to the public line 120. Only the main part in each step described with reference to Fig. 6 will be explained.

If the user has not used the image forming apparatus 100 for a predetermined time (t2 - t1) after the user used the image forming apparatus 100 in the standby mode at time t1, the apparatus shifts to the deep sleep mode at time t2. When a predetermined time elapses after shifting to the deep sleep mode, the apparatus returns from the deep sleep mode at time t3. After that, the connection to the network is determined at time t4. If it is determined that the apparatus is not connected to the network, the apparatus shifts to the power-off mode at time t5. On the other hand, if it is determined at time t4 that the apparatus is connected to the network, the apparatus is maintained in the deep sleep mode even after time t5. Note that a period (t3 - t2) from when the apparatus shifts to the deep sleep mode at time t2 until the connection to the network is determined at time t3 is the time set in the timer circuit 124, and is, for example, 20 min.

According to the first embodiment, when the image forming apparatus 100 is connected to a plurality of networks, a connection to one of the networks is confirmed after shifting to the deep sleep mode. If a connection to one of the networks is confirmed, the apparatus is prevented from shifting to the power-off mode even when a predetermined time elapses after shifting to the deep sleep mode. With this processing, the connection to each of the plurality of networks is not confirmed, and it is then possible to reduce the number of times the apparatus returns from the deep sleep mode to confirm the connection to each network, thereby further reducing the power consumption in the standby state. In general, the connection to the LAN can be confirmed even in the deep sleep mode. However, to confirm the connection to the public line, it is necessary to temporarily return the apparatus from the deep sleep mode to the standby mode. Therefore, an increase in number of times whether the apparatus is connected to the public line is confirmed leads to an increase in power consumption in the standby state. As described in the first embodiment, however, it is possible to solve this problem by preventing the apparatus from shifting to the power-off mode when a connection to a specific network can be confirmed.

### Second Embodiment

The second embodiment of the present invention will be described. In the second embodiment, if circuits belonging to a second power supply system circuit 4002 or third power supply system circuit 4003 are connected to networks, only the second power supply system circuit 4002 is activated to determine a connection to a network belonging to the power supply system. A connection to a network belonging to the third power supply system circuit 4003 is not determined, thereby suppressing the power consumption without activating the third power supply system circuit 4003.

A state in which power is supplied to all of a first power supply system circuit 4001, the second power supply system circuit 4002, and the third power supply system circuit 4003 corresponds to standby mode 1 described with reference to Fig. 5. A state in which power is supplied to only the first power supply system circuit 4001 and second power supply system circuit 4002 corresponds to standby mode 2 described with reference to Fig. 5. Note that the arrangement of an image forming apparatus 100 according to the second embodiment is the same as that according to the first embodiment and a description thereof will be omitted.

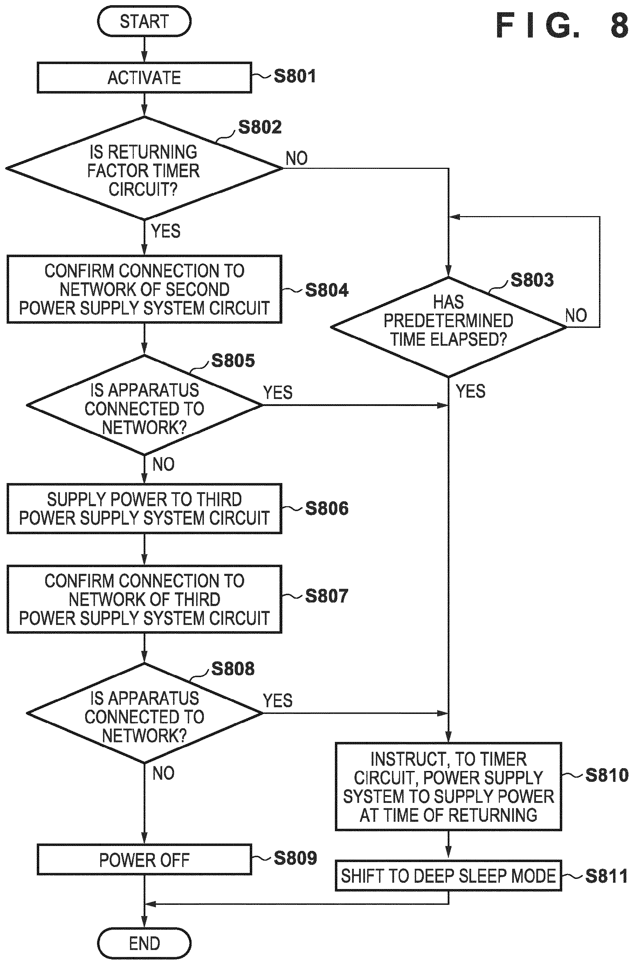

Fig. 8 is a flowchart for explaining the processing of the image forming apparatus 100 according to the second embodiment. A program for executing the processing is stored in a memory 140. When a CPU 200 reads out and executes the program, the processing shown in the flowchart is implemented.

This processing is activated upon power-on of the apparatus or interruption from a timer circuit 124. In step S801, the CPU 200 loads the program to activate the apparatus. The process advances to step S802, and the CPU 200 determines whether the activation factor is interruption from the timer circuit 124. The timer circuit 124 is a timer for measuring the time until processing of determining the connection to the network is activated. The determination processing is processing of determining whether the apparatus has been activated to determine the connection to the network. In this state, the apparatus is active in standby mode 2 shown in Fig. 5 in which power is supplied to the first power supply system circuit 4001 and second power supply system circuit 4002. The reason why the apparatus is active in standby mode 2 at this time will be described later.

If the CPU 200 determines in step S802 that the apparatus has been activated by an interrupt signal from the timer circuit 124, the process advances to step S804; otherwise, the process advances to step S803. In step S803, the CPU 200 stands by for a lapse of a predetermined time, and then advances the process to step S810. In step S810, the CPU 200 instructs, to the timer circuit 124, a power supply circuit to be supplied with power when returning the apparatus from the deep sleep mode to the standby mode. In this example, the CPU 200 instructs to return only the second power supply system circuit 4002. Upon activation in step S801 described above, power is supplied to the second power supply system circuit 4002 in addition to the first power supply system circuit 4001 which is continuously supplied with power in the deep sleep mode, and thus the apparatus is activated in standby mode 2 shown in Fig. 5 described above. The process advances to step S811, and the CPU 200 stops power supply to the second power supply system circuit 4002 and third power supply system circuit 4003, and shifts the apparatus to the deep sleep mode, thereby terminating this processing.

On the other hand, if the apparatus has been activated by an interrupt signal from the timer circuit 124, the process advances to step S804, and the CPU 200 confirms a connection between the network and a circuit belonging to the second power supply system circuit 4002 which is already supplied with power. In step S805, the CPU 200 determines whether the apparatus is connected to the network. If it is determined that the apparatus is connected to the network, the process advances to step S810, and the CPU 200 instructs, to the timer circuit 124, a power supply system to be supplied with power at the time of returning, and advances the process to step S811. In step S811, the CPU 200 shifts the apparatus to the deep sleep mode, thereby terminating this processing.

As described above, if the connection between the network and the circuit belonging to the second power supply system circuit 4002 which is already supplied with power is confirmed, the image forming apparatus 100 is not powered off.

On the other hand, if the CPU 200 determines in step S805 that the network and the circuit belonging to the second power supply system circuit 4002 are not connected to each other, the process advances to step S806, and the CPU 200 supplies power to the third power supply system circuit 4003. This sets the apparatus in standby mode 1 shown in Fig. 5, in which power is supplied to all the power supply system circuits 4001 to 4003. The process advances to step S807, and the CPU 200 confirms a connection between the network and a circuit belonging to the third power supply system circuit 4003, which has not been confirmed in step S804. If the CPU 200 determines in step S808 that the circuit belonging to the third power supply system circuit 4003 is connected to the network, the process advances to step S810, and the CPU 200 instructs, to the timer circuit 124, a power supply system to be supplied with power at the time of returning, and then advances the process to step S811. In step S811, the CPU 200 shifts the apparatus to the deep sleep mode, thereby terminating this processing. On the other hand, if the CPU 200 determines in step S808 that the network and the circuit belonging to the third power supply system circuit 4003 are not connected to each other, the process advances to step S809 to power off the image forming apparatus 100, thereby terminating this processing.

In this way, if the connection between the network and the circuit belonging to either the second power supply system circuit 4002 or the third power supply system circuit 4003 is confirmed, the apparatus is prevented from shifting from the deep sleep mode to the power-off mode.

In the second embodiment, since the CPU 200 for determining the connection to the network belongs to the second power supply system circuit 4002, the second power supply system circuit 4002 is activated to cause the CPU 200 to determine the connection to the network. If the power supply system is further separated and the third to sixth power supply system circuits also exist, the CPU 200 holds the priority order of the power supply systems to be supplied with power. The CPU 200 instructs the priority order to the timer circuit 124 before shifting the apparatus to the deep sleep mode. With this processing, when the image forming apparatus 100 returns from the deep sleep mode, it is possible to select a power supply system circuit to be supplied with power, and determine a connection between a network and a circuit belonging to the power supply system circuit supplied with power.

As described above, according to the second embodiment, if there are a plurality of networks connected to a plurality of power supply systems, when a connection to at least one of the networks is confirmed, the apparatus is prevented from shifting from the deep sleep mode to the power-off mode. This produces an effect of significantly reducing the power consumption as compared with a case in which power is supplied to all the power supply systems to confirm a connection to each network.

### Third Embodiment

The third embodiment of the present invention will be described next. In the third embodiment, a case in which whether a link between a LAN 240 and a network I/F 127 belonging to a first power supply system circuit 4001 has been established can be detected all the time will be explained. Note that the arrangement of an image forming apparatus 100 according to the third embodiment is the same as that according to the above-described first embodiment and a description thereof will be omitted.

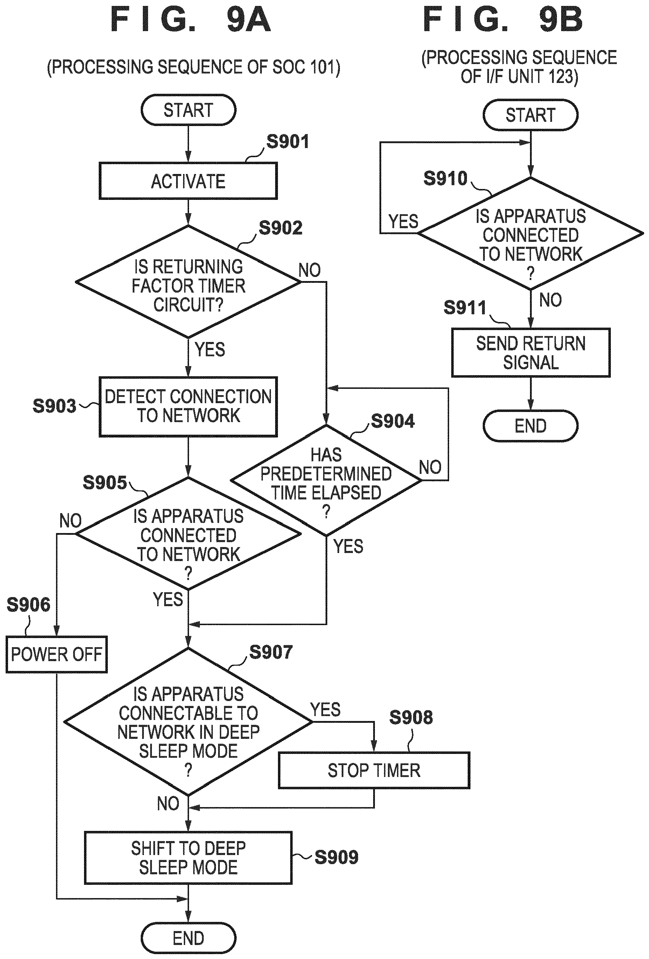

Figs. 9A and 9B are flowcharts for explaining the processing of the image forming apparatus 100 according to the third embodiment. Fig. 9A shows processing executed by a CPU 200 and Fig. 9B shows processing executed by an I/F unit 123.

Processes in steps S901 to S906 of Fig. 9A are the same as those in steps S601 to S606 of Fig. 6 and a description thereof will be omitted. If the CPU 200 determines in step S905 that the apparatus is connected to a network, the process advances to step S907, and the CPU 200 determines whether there is a network for which a connection can be confirmed in the deep sleep mode. If the CPU 200 determines in step S907 that there is a network for which a connection can be confirmed in the deep sleep mode, the process advances to step S908, and the CPU 200 stops time measurement by a timer circuit 124 in the deep sleep mode, and then advances the process to step S909. In step S909, the CPU 200 shifts the apparatus to the deep sleep mode, thereby terminating this processing. On the other hand, if the CPU 200 determines in step S907 that there is no network for which a connection can be confirmed in the deep sleep mode, the process advances to step S909, and the CPU 200 shifts the apparatus to the deep sleep mode without stopping time measurement by the timer circuit 124, thereby terminating this processing. Note that an example of a connection to a network for which the connection can be confirmed in the deep sleep mode is a connection between the I/F unit 123 and the LAN 240.

The flowchart shown in Fig. 9B will be described next.

Since power is supplied to the I/F unit 123 even in the deep sleep mode, the I/F unit 123 determines in step S910 whether the apparatus is connected to the LAN 240 in the deep sleep mode. If the connection can be confirmed, step S910 is executed and processing of confirming the connection to the LAN 240 in the deep sleep mode is continuously executed. If it is determined in step S901 that the apparatus is not connected to the LAN 240, the process advances to step S911, and the I/F unit 123 generates an interrupt signal d2 and sends a return signal 161 to a power supply circuit 125.

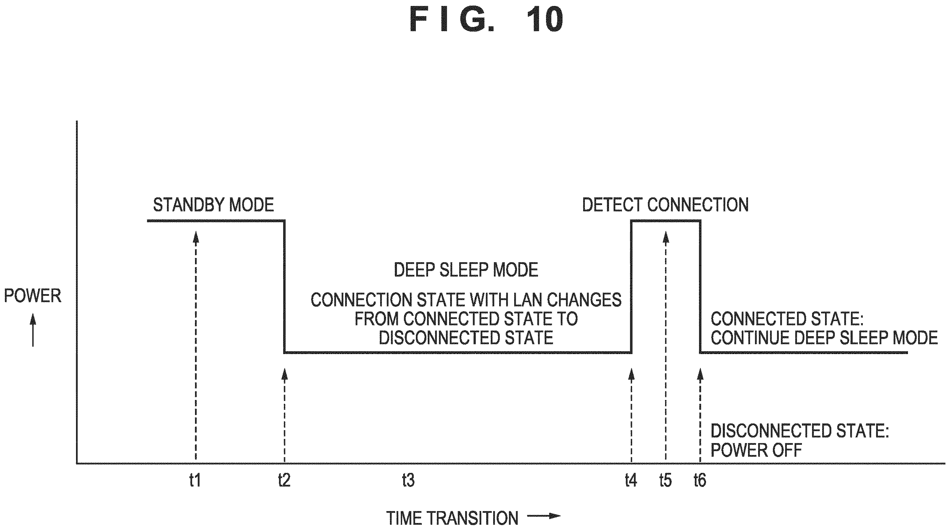

Fig. 10 is a timing chart showing an example of power transition of the image forming apparatus 100 according to the third embodiment.

While the apparatus is connected to the LAN 240 connectable by an all-night power supply, it shifts to the deep sleep mode at time t2. In this deep sleep mode, the connection to the LAN 240 is no longer confirmed at time t4. When it is detected that the connection to the LAN 240 changes from the connected state to the disconnected state, the I/F unit 123 generates the interrupt signal d2. This shifts the apparatus from the deep sleep mode to the standby mode. At time t5, a second power supply system circuit 4002 confirms the connection to the LAN 240. If it is determined that the apparatus is connected to the LAN 240, the apparatus shifts to the deep sleep mode at time t6. On the other hand, if it is determined that the apparatus is not connected to the LAN 240, the apparatus shifts to the power-off mode at time t6.

As described above, according to the third embodiment, a circuit which is supplied with power even in the deep sleep mode determines the connection to the LAN 240 in the deep sleep mode. When the apparatus is disconnected from the LAN 240, it returns from the deep sleep mode. After that, the connection to the LAN 240 is confirmed in the standby mode. If it is determined that the apparatus is connected to the LAN 240, the apparatus shifts to the deep sleep mode. On the other hand, if it is determined that the apparatus is not connected to the LAN 240, the apparatus shifts to the power-off mode.

### Fourth Embodiment

The fourth embodiment of the present invention will be described. Note that the arrangement of an image forming apparatus 100 according to the fourth embodiment is the same as that according to the above-described first embodiment, and a description thereof will be omitted.

When confirming a connection to a network by returning from the deep sleep mode to the standby mode, the network connection confirmation time at the time of installation of the apparatus can be different from that when some period of time elapses after installation. After the image forming apparatus 100 is installed, its state does not change so much. Thus, when some period of time elapses after installation, the frequency at which the apparatus confirms the connection to the network by returning from the deep sleep mode to the standby mode is decreased. This suppresses an increase in power consumption caused by returning from the deep sleep mode to the standby mode.

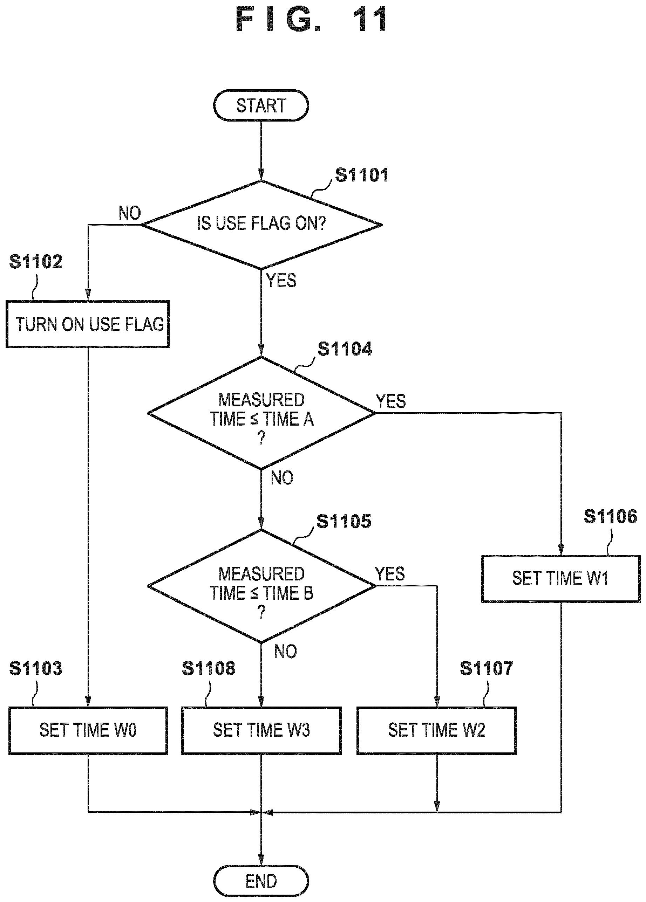

Fig. 11 is a flowchart for explaining the processing of the image forming apparatus 100 according to the fourth embodiment.

This processing starts upon power-on of the image forming apparatus 100. In step S1101, a CPU 200 loads a program, and determines whether a use flag is ON. This use flag is a flag which is turned off upon shipping from a factory and turned on when the user determines that the image forming apparatus 100 has been used, and is stored in a memory 140. If the use flag is OFF, the process advances to step S1102, and the CPU 200 turns on the use flag. The process then advances to step S1103, and a time to be set in a timer circuit 124 is set to W0, thereby terminating this processing.

On the other hand, if the CPU 200 determines in step S1101 that the use flag is ON, the process advances to step S1104, and the CPU 200 determines whether the measured time of the timer circuit 124 is equal to or shorter than time A. If the measured time is equal to or shorter than time A, the process advances to step S1106. In step S1106, the CPU 200 sets the time setting of the timer circuit 124 to W1 (W1 < W0), thereby terminating this processing.

If it is determined in step S1104 that the measured time is longer than time A, the process advances to step S1105, and the CPU 200 checks whether the measured time is equal to or shorter than time B (B > A). If the measured time is equal to or shorter than time B, the process advances to step S1107, and the CPU 200 sets the time setting of the timer circuit 124 to W2 (W2 < W1), thereby terminating this processing. If the CPU 200 determines in step S1105 that the measured time is longer than time B, the process advances to step S1108, and the CPU 200 sets the time setting of the timer circuit 124 to W3 (W3 < W2), thereby terminating this processing.

In general, as the elapsed time after the image forming apparatus 100 is installed is longer, it is desirable to set a longer time (W0 < W1 < W2 < W3). However, these times (W1, W2, and W3) need only be set in consideration of the relationships with times A and B, and need not always satisfy W1 < W2 < W3.

As described above, according to the fourth embodiment, the time until the apparatus returns from the deep sleep mode to the standby mode is set according to the elapsed time after the image forming apparatus 100 is installed. This can reduce the power consumption along with the stabilization of the use state of the image forming apparatus 100.

### Fifth Embodiment

A case in which the user intentionally does not connect an image forming apparatus 100 to a network is considered. In this case, it is unnecessary for the image forming apparatus 100 to return from the deep sleep mode to confirm the connection to the network. Therefore, in the image forming apparatus 100 according to the fifth embodiment, a menu for selecting, by the user, use/disuse of each of a plurality of connected networks is provided. For a network for which disuse has been selected, processing of confirming the connection to the network by returning the image forming apparatus 100 from the deep sleep mode to the standby mode is not executed.

This can reduce the number of times the apparatus unnecessarily returns from the deep sleep mode, thereby suppressing an increase in power consumption required to confirm a connection to a network.

### Sixth Embodiment

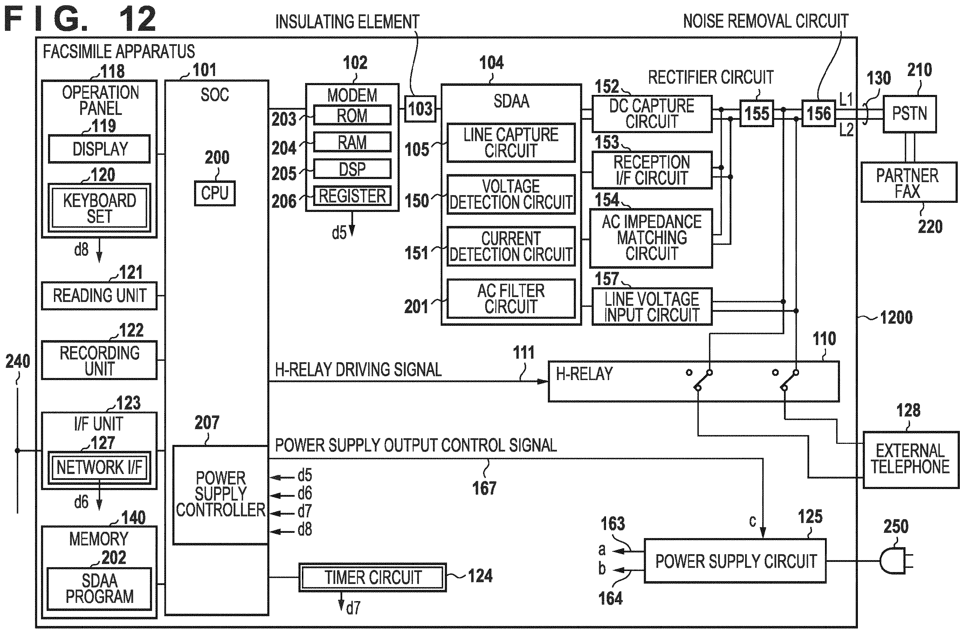

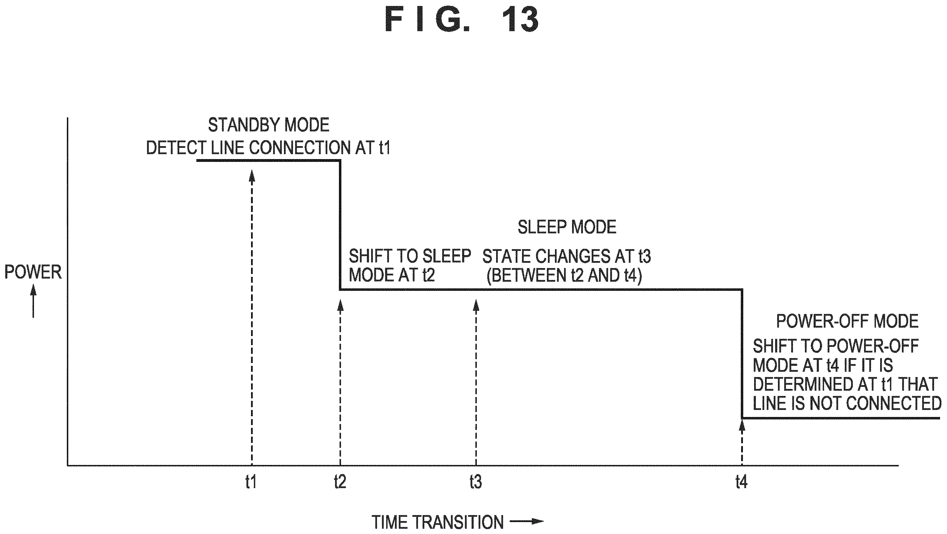

The sixth and seventh embodiments of the present invention will be described with reference to Figs. 12 to 22. Fig. 13 shows an example, different from Fig. 2, of power transition considered when power management of powering off a digital multifunction peripheral is performed to achieve power management of the target value 0.5 W of the power consumption prescribed by Lot 26, as described above. Fig. 13 is a timing chart for explaining an example of time transition of power management according to the result of detecting a connection to a telephone line in the digital multifunction peripheral.

Whether the digital multifunction peripheral is connected to the telephone line in the standby mode as a usable state is detected, and it is detected at time t1 that the digital multifunction peripheral is not connected to the telephone line. If the digital multifunction peripheral has not been used for a given time (t4 - t1) while it is not connected to the telephone line, it shifts to the power-off mode of powering off the digital multifunction peripheral at time t4. In this case, in terms of power saving, the digital multifunction peripheral may shift to the sleep mode at time t2. If the control method disclosed in Japanese Patent Laid-Open No. 2006-254384 is executed in the sleep mode, no power is supplied, in the sleep mode, to a facsimile reception detection unit for monitoring a factor for returning from the sleep mode or the like, or a unit for detecting a print request from a network. In this case, even if a communication line is re-connected to a public line at, for example, time t3 in the sleep mode, the CPU of the digital multifunction peripheral cannot detect the connection. Consequently, even though the communication line is connected to the public line, the digital multifunction peripheral shifts to the power-off mode at time t4. This applies to a case in which it is detected at time t1 that the digital multifunction peripheral is not connected to the telephone line, and the digital multifunction peripheral shifts to the sleep mode at time t2, and is then connected to the telephone line at time t3 between time t2 and time t4. Note that the power consumption is estimated to be several tens of watts in the standby mode, several watts in the sleep mode, and almost zero watt in the power-off mode.

To solve the above problem, for example, in the sleep mode, power can be supplied to a circuit for monitoring a factor for returning from the sleep mode, for example, a circuit for detecting a print request from a network or a circuit for detecting a facsimile incoming call. More specifically, power is supplied to an SDAA, a modem for detecting an incoming call of a facsimile apparatus, and the like. The SDAA is a network control unit (NCU) which is arranged between the telephone line and the modem and formed from a semiconductor. At this time, power is supplied to the CPU of the facsimile apparatus but the operation of the CPU is stopped to reduce the power consumption. With this processing, the operation of the CPU is stopped, and thus it is impossible to determine that the connection to the telephone line has changed from the connected state to the disconnected state in the sleep mode. In addition, it is impossible to determine that the telephone line has been connected in the speed mode and the state has changed from the disconnected state to the connected state.

In the sixth and seventh embodiments, there is provided a technique of controlling a shift to the power-off mode by detecting a change in the connection state with the line in the sleep mode.

Fig. 12 is a block diagram for explaining the arrangement of a facsimile apparatus 1200 according to the sixth embodiment of the present invention. The facsimile apparatus according to this embodiment will be exemplified as a communication apparatus according to the present invention. This communication apparatus is not limited to a facsimile apparatus, and may be an information processing such as a multifunction peripheral or PC.

An SOC 101 includes a CPU 200, and controls the overall operation of the facsimile apparatus 1200. A memory 140 is connected to the SOC 101, functions as a main storage device and auxiliary storage device which are accessible by the CPU 200, and is used as a work memory of the CPU 200 or a memory for storing control programs. In addition, the memory 140 is also used as a memory for temporarily storing image data and various kinds of information at the time of facsimile transmission or reception, includes a nonvolatile memory, and is used to store information set by the user. An SDAA program 202 is a program to be executed by a DSP 205 of a modem 102. After the SDAA program 202 is transferred to the modem 102 and loaded into a RAM 204, it is executed by the DSP 205. A RAM, hard disk, or flash memory can be used as the memory 140.

An operation panel 118, a reading unit 121, a recording unit 122, and an I/F unit 123 are connected to the SOC 101. The operation panel 118 includes a display 119 and a keyboard set 120, which serve as a user interface. The display 119 displays the state, menu, and the like of the apparatus. The keyboard set 120 includes a ten-key pad and buttons for accepting various instructions input from the user. The user can input user setting information using this keyboard. The reading unit 121 reads an image of a document, and generates image data. The generated image data may undergo facsimile transmission to a partner apparatus via a communication line 130 and a public line 210, or may be printed by the recording unit 122. The I/F unit 123 functions as an interface for connecting various information devices. The I/F unit 123 includes, for example, a network I/F 127, and is connected to a LAN (Local Area Network) 240. A connection to the network I/F 127 is confirmed by confirming the states of a transmission path and connection destination and determining whether data transmission/reception is possible in the data link layer of the basic protocol of the network. The network I/F 127 functions as a LAN controller, and transmits/receives data to/from, for example, an external gateway by a CSMA/CD (Carrier Sense Multiple Access/Collision Detection) communication scheme.

The modem 102 is a modulator/demodulator, which includes a ROM 203, the RAM 204, the DSP 205, and a register 206 and operates under the control of the SOC 101. The modem 102 executes modulation processing using image data which has been read by the reading unit 121 and is to undergo facsimile transmission, and demodulation processing of a signal received via the communication line 130 and public line 210. The modem 102 is connected to an SDAA (that is, silicon data access arrangement) 104 via an isolating element 103. The ROM 203 stores programs to be executed by the DSP 205. The SDAA program 202 transferred from a host and the programs stored in the ROM 203 are loaded into the RAM 204, and executed by the DSP 205. The DSP 205 executes the program loaded into the RAM 204 to control the operation of the modem 102. The register 206 stores the state of the SDAA 104 or an instruction from the SOC 101.

The SDAA 104 is a semiconductor NCU (Network Control Unit) as an example of a circuit for executing network control, and includes a line capture circuit 105, a voltage detection circuit 150, a current detection circuit 151, and an AC filter circuit 201. The SDAA 104 is a network controller, which is connected to the communication line 130, and functions as an interface between the facsimile apparatus 1200 and external communication line 130. When performing communication with a partner apparatus via the communication line 130, the SDAA 104 controls the connection (capture) state of the line. A telephone 128 which is externally attached to the facsimile apparatus 1200 is also connected to the communication line 130. The telephone 128 is connected to the communication line 130 via an H-relay 110, and the SDAA 104 is connected to the communication line 130 in parallel to the telephone 128 in a ringing incoming call standby state. The SDAA 104 not only captures the line to control communication when performing facsimile transmission/reception, but also controls the capture state of the line when the telephone 128 is used to perform voice communication with the partner apparatus via the communication line 130. The SDAA 104 executes these control operations under the control of the SOC 101.

The SDAA 104 controls the DC capture state of the line using the line capture circuit 105. DC impedance when the line capture circuit 105 performs a DC capture operation is variable. This impedance is obtained based on the preset current characteristic (to be referred to as the DC-VI characteristic) with respect to DC voltage. The voltage detection circuit 150 is a circuit for monitoring the voltage of the communication line 130. The current detection circuit 151 is a circuit for monitoring the current on the communication line 130. The AC filter circuit 201 is connected to the preceding stage of the voltage detection circuit 150 or current detection circuit 151, and prevents a detection error by removing an AC component when detecting the DC voltage or current.

A DC capture circuit 152 is a peripheral circuit of the SDAA 104, and adjusts the DC impedance under the control of the SDAA 104 while performing a DC capture operation by adjusting the current of a current source. The DC capture circuit 152 is also used to generate a line open state and send a dial pulse as a kind of a selection signal for the line. The rectifier circuit 155 includes a diode bridge, and rectifies a signal from the communication line 130 and transmits it to the SDAA 104. A reception I/F circuit 153 is an interface circuit for receiving a facsimile reception signal received via the communication line 130. An AC impedance matching circuit 154 is a circuit for adjusting the AC impedance to 600 Ω in, for example, Japan. A noise removal circuit 156 suppresses a lightning surge, electromagnetic noise, and the like from the communication line 130, and prevents noise of the facsimile apparatus 1200 from being sent via the communication line 130.

Since the facsimile apparatus according to the sixth embodiment includes no CI detection circuit, a calling signal (CI signal) received from the communication line 130 is input to the SDAA 104 via a line voltage input circuit 157, and detected by the voltage detection circuit 150 of the SDAA 104. The modem 102 detects the CI signal using the line voltage value. A PSTN exchange in Japan sends, as a CI signal, an AC voltage of 75 Vrms superimposed on a DC voltage of about 48 V to the facsimile apparatus 1200. With this operation, by using a line voltage value detected by the voltage detection circuit 150 of the SDAA 104, it is determined whether the modem 102 has received a CI scene.

The H-relay 110 switches between the connected state in which the external telephone 128 is connected to the communication line 130 and the state in which the external telephone 128 is disconnected from the communication line 130. The SOC 101 controls the H-relay 110 using an H-relay driving signal 111. Note that when the telephone 128 is disconnected from the communication line 130 by the H-relay 110, the facsimile apparatus 1200 is set in a so-called non-ringing incoming call state in which the telephone 128 does not ring even if a CI signal is received. The facsimile apparatus shown in Fig. 12 includes no hook detection circuit using a photocoupler and the like. If a DC voltage of about 48 V supplied from the communication line 130 is used as hook detection voltage, and the external telephone 128 is off-hooked to perform a DC capture operation, the line voltage drops from 48 V to about 8 V due to the line resistance. If the external telephone 128 is on-hooked to release the line, the line voltage returns to 48 V. The line voltage is input to the SDAA 104 via the line voltage input circuit 157, and the modem 102 uses the line voltage value detected by the voltage detection circuit 150 of the SDAA 104 to detect whether the external telephone 128 has been on-hooked or off-hooked. The result of detecting the off-hook or on-hook of the external telephone 128 is transmitted from the modem 102 to the SOC 101. The hook detection circuit may be included by connecting a hook detection DC voltage sending circuit or pseudo CI sending circuit from one end of the H-relay 110, as a matter of course.

A partner facsimile apparatus 220 is connected via the PSTN (public line) 210. A timer circuit 124 is connected to the SOC 101. After the timer circuit 124 measures a time set from the SOC 101, it notifies the CPU 200 of it by interruption or the like. The SOC 101 sets activation of the timer circuit 124 and controls clearing of the timer. A power supply circuit 125 is a circuit for generating power to be supplied to a circuit block within the facsimile apparatus 1200. In Japan, an AC voltage of 100 V is supplied from a commercial power supply 250 to generate, for example, power supply outputs 163 and 164 of a plurality of systems. Note that a power supply output control signal 167 supplied from a power supply controller 207 of the SOC 101 to the power supply circuit 125 is used to control the power supply outputs 163 and 164.

Interrupt signals d5, d6, d7, and d8 generated by the modem 102, network I/F 127, timer circuit 124, and keyboard set 120 are supplied to the power supply controller 207. When one of the interrupt signals is input, the power supply controller 207 notifies the CPU 200 that a factor for returning from the sleep mode has occurred. In response to the occurrence of the returning factor, the CPU 200 returns from a stop state in which the operation is stopped, and restarts execution of the program. The CPU 200 controls the power supply controller 207 to output the power supply output 164 of the power supply circuit 125 using the power supply output control signal 167. After returning from the stop state, the CPU 200 accesses the power supply controller 207, and determines the circuit which has generated the returning factor, thereby clearing the interrupt factor.

The interrupt signal d5 is an interrupt signal output when the modem 102 detects a change in line voltage. The interrupt signal d6 is an interrupt signal generated when the network I/F 127 detects a print job destined for this facsimile apparatus 1200. The interrupt signal d7 is an interrupt signal output by the timer circuit 124 when a predetermined time elapses. The interrupt signal d8 is an interrupt signal indicating pressing of the keyboard of the keyboard set 120. Some or all of the interrupt signals d5, d6, d7, and d8 are ORed, and supplied to the power supply controller 207 of the SOC 101 as an interrupt signal d. In this case, after returning from the stop state due to the interrupt signal d, the CPU 200 determines which of the modem 102, network I/F 127, timer circuit 124, and keyboard set 120 has generated the interrupt signal.

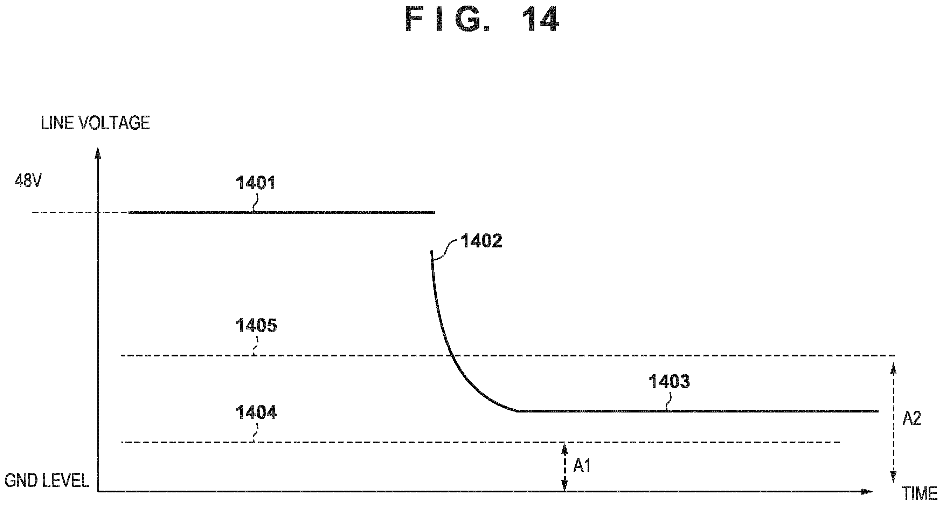

Fig. 14 is a timing chart showing an example of a change in the line voltage of the communication line 130 when the facsimile apparatus 1200 captures the line according to the sixth embodiment.

The line voltage when a DC capture operation is performed to connect the communication line 130 to the public line 210 and the line voltage when the communication line 130 is not connected to the public line 210 have the relationship to be described below.

Referring to Fig. 14, in 1401, the DC capture circuit 152 is not in a DC capture state (on-hook), and the voltage value at this time is about 48 V. A DC resistance value when seen from the public line 210 is 1 MΩ or more. In 1402, an off-hook operation starts, and the DC capture circuit 152 adjusts the DC impedance under the control of the SDAA 104 while performing a DC capture operation by adjusting a current. At this time, a voltage drop which occurs due to the line resistance of the public line 210 causes the line voltage to gradually drop with an increase in line current. In 1403, adjustment of the DC impedance ends, and the DC resistance value when seen from the public line 210 is a constant value. In this state 1403, the line voltage value when seen from the facsimile apparatus 1200 decreases due to a voltage drop caused by the line resistance. When, for example, the DC impedance is about 266 Ω and a line current of 30 mA flows, if the line resistance and the internal resistance of the exchange are about 1,333 Ω, a voltage drop of 30 [mA] × 1,333 [Ω] ≈ 40 [V] occurs. If the public line 210 undergoes constant voltage control, a voltage drop from about 48 V to about 40 V occurs, and the line voltage when seen from the facsimile apparatus 1200 becomes about 8 V. The same applies to a case in which the external telephone 128 is off-hooked without performing a line capture operation by the SDAA 104.

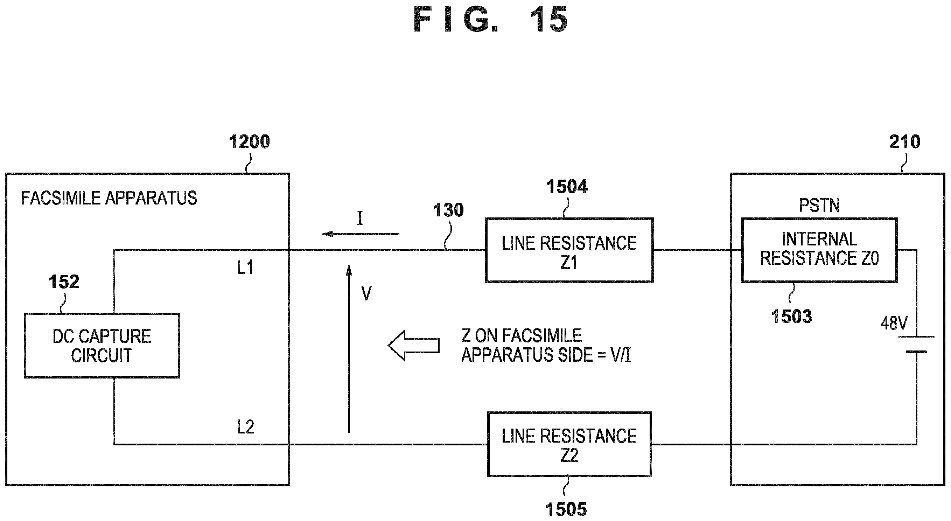

Fig. 15 is a schematic block diagram for explaining the DC capture operation of the facsimile apparatus 1200 according to the sixth embodiment. A description of the rectifier circuit 155 and the like which are not shown in Fig. 15 will be omitted.

A DC voltage of about 48 V is supplied from the station-side exchange of the public line 210 to the facsimile apparatus 1200. A DC voltage of 48 V is supplied, via an internal resistance Z0 1503 of the station-side exchange and a line resistance Z1 1504 or line resistance Z2 1505, to the DC capture circuit 152 connected to the communication line 130. The DC capture circuit 152 includes a circuit such as a transistor or resistance capable of changing the internal DC impedance, and adjusts a current value I supplied from the public line 210 under the control of the SDAA 104. As a DC impedance Z (Z is represented by V/I) of the DC capture circuit 152 increases under the control of the SDAA 104, the line current decreases. On the other hand, as the DC impedance Z decreases, the line current increases.

The SDAA 104 can monitor the voltage and current across the DC capture circuit 152, and adjust the DC impedance Z of the DC capture circuit 152 to comply with the characteristic (DC-VI characteristic) between the defined DC voltage V and current I. The station-side exchange of the public line 210 includes a voltage source or current source. The current source is formed when the station-side exchange controls the internal resistance Z0 1503.

At the start of a DC capture operation of the facsimile apparatus 1200, the voltage between lines L1 and L2 of the facsimile apparatus 1200 significantly drops due to the line resistance Z1 1504 and line resistance Z2 1505 (several hundred to several KΩ). Based on the premise that the voltage drops, the DC impedance Z is controlled to satisfy the defined DC-VI characteristic. For example, the voltage between the lines L1 and L2 of the facsimile apparatus 1200 is assumed to decrease to about 8 V due to a voltage drop after a DC capture operation even though it is a DC voltage of 48 V before the DC capture operation. At this time, the direct impedance Z obtained by including the DC capture circuit 152 of the facsimile apparatus 1200 is controlled by the SDAA 104 to decrease from several tens of Ω to several hundred Ω after a DC capture operation even though it is 1 MΩ or more before the DC capture operation.

A method of determining whether the facsimile apparatus 1200 is connected to the public line 210 via the communication line 130 will be described.

If the communication line 130 and the public line 210 are not connected to each other, the apparatus is disconnected from the public line 210, and is not thus supplied with 48 V from the public line 210. Consequently, the line voltage of the communication line 130 becomes almost 0 V. On the other hand, if the communication line 130 and the public line 210 are connected to each other and the SDAA 104 performs a DC capture operation, the line voltage drops, as described above, but does not become 0 V and is held at a predetermined constant voltage. Therefore, for example, a setting value A1 of a threshold voltage 1404 shown in Fig. 14 is set to about 3 V. If the line voltage is lower than the threshold voltage (3 V) while the SDAA 104 is not capturing the line, it can be determined that the communication line 130 is not connected to the public line 210.

Even if the communication line 130 is connected to the public line 210 and the SDAA 104 is not capturing the line, if the external telephone 128 has been off-hooked, the line voltage drops and is held at a predetermined constant voltage. Therefore, for example, the setting value A1 of the threshold voltage 1404 is set to about 3 V, a setting value A2 of a different threshold voltage 1405 is set to about 20 V, and a voltage falls within the range from the threshold voltage A1 (inclusive) to the threshold voltage A2 (inclusive), it can be determined that the external telephone 128 is capturing the line.

The voltage detection circuit 150 of the SDAA 104 can execute line voltage detection processing for determining whether the communication line 130 is connected to the public line 210, by monitoring the line voltage. That is, the register 206 of the modem 102 holds, in advance, the setting values A1 and A2 of the threshold voltages 1404 and 1405. If the SDAA 104 compares the line voltage detected by the voltage detection circuit 150 with the threshold voltage values, and the line voltage is lower than the setting value A1 of the threshold voltage, a flag indicating that the communication line 130 is not connected to the public line 210 is held in the register 206. If the line voltage falls within the range from the setting value A1 (inclusive) of the threshold voltage to the setting value A2 (inclusive) of the threshold voltage, a flag indicating that the external telephone 128 connected to the communication line 130 is capturing the line is held in the register 206. Consequently, the CPU 200 can determine, by referring to this flag, that the communication line 130 and the public line 210 are connected to each other, that the external telephone 128 is capturing the line, or that the communication line 130 and the public line 210 are not connected to each other. It is possible to control the operation of the facsimile apparatus 1200 according to this situation.

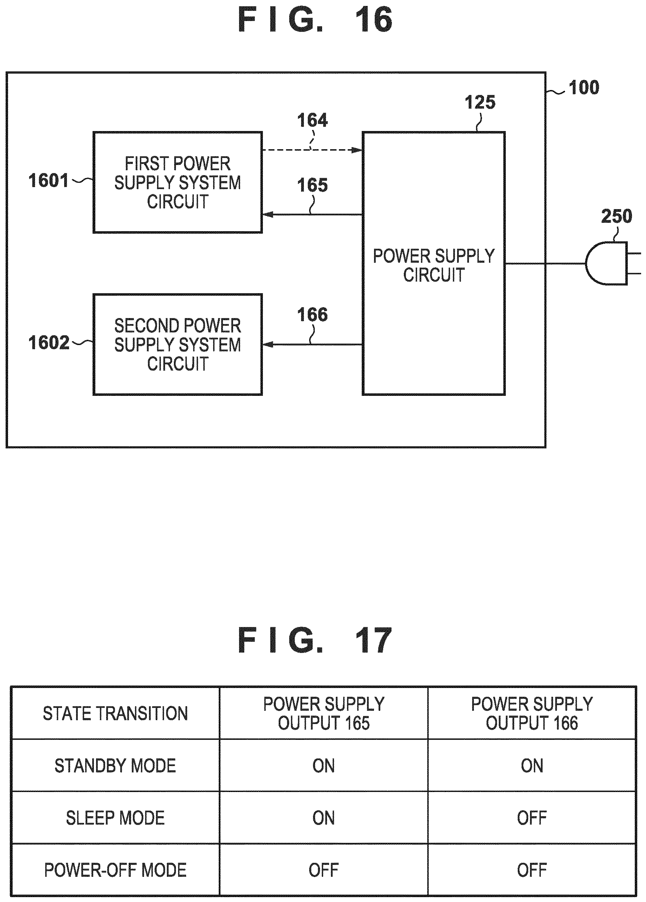

Fig. 16 is a block diagram for explaining power supply in the facsimile apparatus 1200 according to the sixth embodiment.

The power supply circuit 125 is supplied with an AC voltage of 100 V from a commercial power supply via the outlet 250, generates power supply voltages of a plurality of systems based on the AC voltage of 100 V, and supplies the power supply voltages to the circuit blocks of the facsimile apparatus 1200. The power supply output 163 generated by the power supply circuit 125 is supplied to a first power supply system circuit 1601, and the power supply output 164 generated by the power supply circuit 125 is supplied to a second power supply system circuit 1602. The first power supply system circuit 1601 is a circuit which needs to be continuously supplied with power even in the sleep mode. This includes the modem 102, timer circuit 124, network I/F 127, keyboard set 120, memory 140, and SOC 101 all of which are shown in Fig. 12. Note that the modem 102 supplies power to the SDAA 104 via the insulating element 103. In the sleep mode, in the facsimile apparatus 1200, power is supplied to the modem 102 and SDAA 104 but the modem 102 is made to shift to the low power consumption mode in which only minimum processing can be performed. At this time, the frequency of the operation clock of the modem 102 is decreased, and power supply to a portion of the modem 102, which does not operate, is blocked. To reduce the power consumption of the H-relay 110, the H-relay driving signal 111 is controlled to shift to the ringing incoming call state in which the external telephone 128 and the communication line 130 are connected to each other. If a hook detection circuit is included by connecting a hook detection DC voltage sending circuit or pseudo CI sending circuit from one end of the H-relay 110, the hook detection circuit may be used to detect the off-hook of the external telephone 128 while remaining in the non-ringing incoming call state.

When a calling signal (CI signal) is received from the communication line 130 in the sleep mode, the CI signal received from the communication line 130 is input to the SDAA 104 via the line voltage input circuit 157, and detected by the voltage detection circuit 150 of the SDAA 104. As described above, in the sleep mode, the modem 102 has shifted to the low power consumption mode in which only minimum processing can be performed, and thus cannot determine the reception of the CI signal using the line voltage. When the voltage detection circuit 150 detects a change in voltage, and detects the CI signal, the interrupt signal d5 is supplied to the SOC 101 to return the apparatus from the sleep mode to the standby mode.

When the time set in the timer circuit 124 elapses, the timer circuit 124 supplies the interrupt signal d7 to the SOC 101 to notify it of the timing of shifting to a predetermined operation mode. When the SOC 101 is notified of the timing at which the apparatus can shift from the standby mode to the sleep mode, a timer value M1 is set in the timer circuit 124 and the timer circuit 124 is activated. Alternatively, when the time during which the communication line 130 is not connected to the public line 210 is measured, and the SOC 101 is notified of the timing at which the apparatus can shift to the power-off mode, a timer value M2 is set in the timer circuit 124 and the timer circuit 124 is activated.

Upon receiving, via the LAN 240, a print job destined for the facsimile apparatus 1200 in the sleep mode, the network I/F 127 supplies the interrupt signal d6 to the SOC 101 to return the apparatus from the sleep mode to the standby mode.

Upon accepting various instructions input from the user, the keyboard set 120 supplies the interrupt signal d8 to the SOC 101 to return the apparatus from the sleep mode to the standby mode.

The first power supply system circuit 1601 is a circuit for generating a returning factor in the sleep mode, and is supplied with power even in the sleep mode.

On the other hand, the second power supply system circuit 1602 indicates a circuit other than the first power supply system circuit 1601, for which power supply is stopped in the sleep mode. For example, the reading unit 121 and recording unit 122 of the facsimile apparatus 1200 are included in the second power supply system circuit 1602, and power supply to them is stopped in the sleep mode.

When shifting the facsimile apparatus 1200 according to the sixth embodiment from the standby mode to the sleep mode, the SOC 101 supplies the power supply output control signal 167 to the power supply circuit 125, and stops the output of the power supply output 164 output from the power supply circuit 125. This stops power supply to the second power supply system circuit 1602 of the facsimile apparatus 1200, thereby shifting the apparatus to the sleep mode.

When shifting the facsimile apparatus 1200 from the standby mode to the power-off mode, the SOC 101 belonging to the first power supply system circuit 1601 supplies the power supply output control signal 167 to the power supply circuit 125. This stops the power supply outputs 163 and 164 from the power supply circuit 125, thereby shifting the apparatus to the power-off mode. When shifting the facsimile apparatus 1200 from the sleep mode to the power-off mode, the SOC 101 supplies the power supply output control signal 167 to the power supply circuit 125, and stops the power supply output 163 from the power supply circuit 125. At this time, the power supply output 164 has already been stopped, and thus the facsimile apparatus 1200 shifts to the power-off mode.

Fig. 17 is a table for explaining state transition of the power supply outputs from the power supply circuit 125 in correspondence with the state of the facsimile apparatus 1200 according to the sixth embodiment. Fig. 17 shows the states of the power supply outputs from the power supply circuit 125 in correspondence with the operation mode of the facsimile apparatus 1200.

In the standby mode, both the power supply outputs 163 and 164 are ON. In the sleep mode, only the power supply output 163 to the first power supply system circuit 1601 is ON. In the power-off mode, both the power supply outputs 163 and 164 are OFF, and the operator needs to turn on again the power switch of the facsimile apparatus 1200 to shift it from the power-off mode to the standby mode.

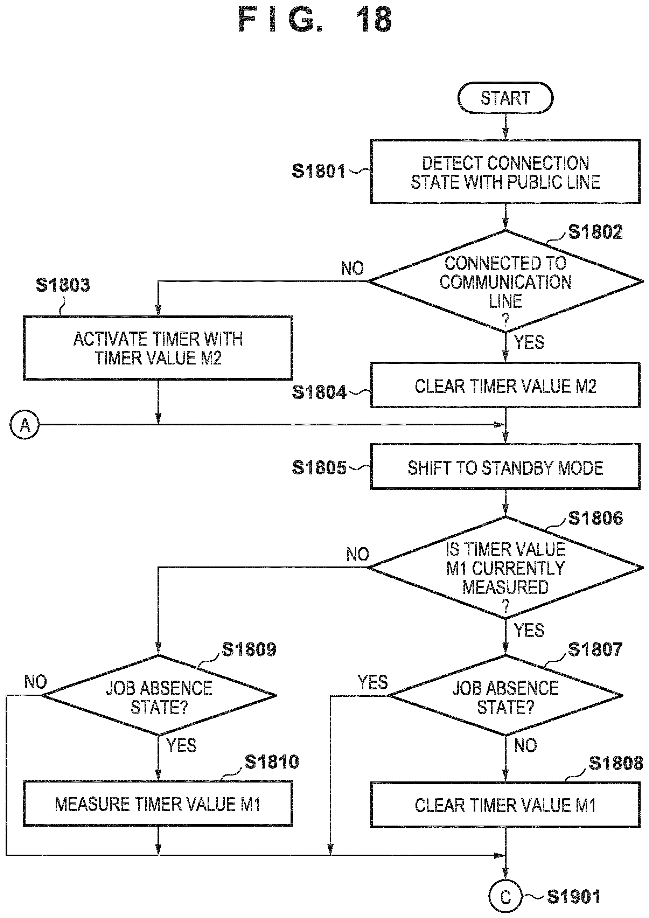

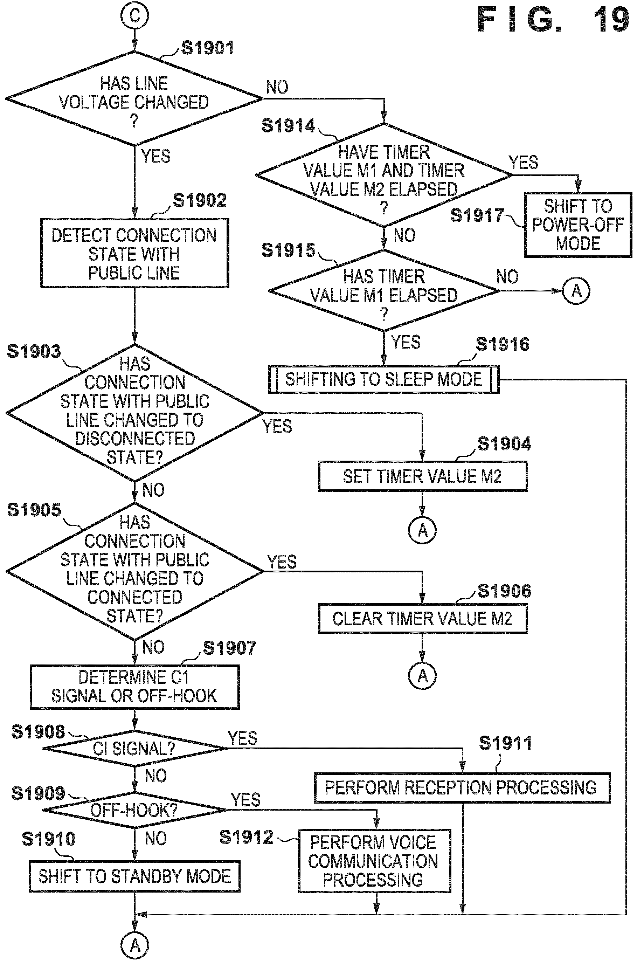

Figs. 18 and 19 are flowcharts for explaining transition of the operation state of the facsimile apparatus 1200 according to the sixth embodiment. Note that a program for executing this processing is stored in the memory 140. When the CPU 200 executes the program, the processing shown in the flowchart is implemented. This processing starts upon power-on of the facsimile apparatus 1200, and the CPU 200 performs reset and initial setting of the modem 102 and SDAA 104 according to the program and settings loaded from the nonvolatile memory of the memory 140. When the modem 102 and SDAA 104 are reset, the register 206 of the modem 102 returns to a default value.

In step S1801, while the SDAA 104 is not performing a DC capture operation, the CPU 200 detects whether the communication line 130 is connected to the public line 210, and holds the detection result in the memory 140 and the flag of the register 206 of the modem 102.

The process advances to step S1802, and the CPU 200 determines whether the communication line 130 is connected to the public line 210. If it is determined that the communication line 130 and the public line 210 are not connected to each other, the process advances to step S1803, and the CPU 200 sets the timer value M2 in the timer circuit 124, and advances the process to step S1805. The reason why the timer value M2 is set is that the time during which the communication line 130 is not connected to the public line 210 is measured to shift the apparatus to the power-off mode. That is, when the state in which the communication line 130 and the public line 210 are not connected to each other continues and the time during which the facsimile apparatus 1200 does not operate continues until the timer value M2 elapses, the CPU 200 shifts the facsimile apparatus 1200 to the power-off mode.

On the other hand, if it is determined in step S1802 that the communication line 130 and the public line 210 are connected to each other, the process advances to step S1804 and the timer value M2 set in the timer circuit 124 is cleared. This is done to prevent the facsimile apparatus 1200 from shifting to the power-off mode even if the time during which the facsimile apparatus 1200 does not operate continues when the communication line is connected to the public line 210. Even if the timer value M2 is set in the timer circuit 124 and the timer value is not measured, this clear processing is executed.

The process advances to step S1805, and the CPU 200 shifts the apparatus to the standby mode, and performs processing of standing by for various jobs. A user operation via the operation panel 118, reception of a job from the network I/F 127, an incoming call from the public line 210, and the off-hook of the external telephone 128 are monitored. While the state in which various jobs and the like are not input continues, the timer circuit 124 and memory 140 are used to perform monitoring processing. For example, while no job is input, the CPU 200 acquires the measured time by accessing the timer circuit 124, and holds it in the memory 140. While the state in which there is no job continues, it is possible to access the timer circuit 124 again after the lapse of a given time, and acquire the elapsed time.

The process advances to step S1806, the CPU 200 accesses the timer circuit 124, and determines whether measurement of the timer value M1 for shifting to the sleep mode has started. This timer value M1 is a timer value for measuring the time during which the job absence state continues. Alternatively, the CPU 200 may save the activation state of the timer value M1 in the memory 140 after accessing the timer circuit 124, and determine that the operation of the timer circuit 124 does not change before an interrupt signal is input from the timer circuit 124. When there is no user operation, no input of various jobs, no incoming call from the public line 210, or no off-hook of the external telephone 128 for a given time, the facsimile apparatus 1200 starts measurement of the timer value M1. If it is determined in step S1806 that measurement of the timer value M1 has started, the process advances to step S1807; otherwise, the process advances to step S1809. In step S1809, the CPU 200 determines whether the job absence state continues. If the job absence state continues, the process advances to step S1810, and the CPU 200 causes the timer circuit 124 to start measurement of the timer value M1, and advances the process to step S1901 (Fig. 19). On the other hand, if it is determined in step S1809 that a job presence state is set by a user operation for the facsimile apparatus 1200, input of various jobs, an incoming call from the public line 210, the off-hook of the external telephone 128, or the like, the process advances to step S1901.

If the CPU 200 determines in step S1807 that the job absence state continues, the process advances to step S1901. On the other hand, if it is determined in step S1807 that the job presence state is set by one of a user operation for the facsimile apparatus 1200, input of various jobs, an incoming call from the public line 210, and the off-hook of the external telephone 128, the process advances to step S1808. In step S1808, the CPU 200 stops measurement of the timer value M1 by the timer circuit 124, and clears the timer value. The process advances to step S1901, and processing corresponding to the user operation or acceptance of various jobs is performed. Processing of determining whether the operation is the incoming call from the public line 210 or the off-hook of the external telephone 128 is performed in step S1907 (to be described later).

The flowchart shown in Fig. 19 will be described.

In step S1901, the CPU 200 determines whether the line voltage of the communication line 130 has changed. If the line voltage has changed, the modem 102 inputs the interrupt signal d5 to the SOC 101. This makes it possible to determine based on the interrupt signal d5 whether the line voltage has changed. If the line voltage has not changed, the process advances to step S1914; otherwise, the process advances to step S1902. In step S1902, the CPU 200 detects the connection state between the communication line 130 and the public line 210 by accessing the modem 102. At this time, it is possible to acquire the line voltage value by accessing the modem 102, in addition to a flag indicating that the communication line 130 and the public line 210 are not connected to each other or the external telephone 128 has been off-hooked.

The process advances to step S1903, and the CPU 200 determines whether the connection state between the communication line 130 and the public line 210 has changed from the connected state to the disconnected state. Since data indicating whether the communication line 130 is connected to the public line 210 is previously held in the memory 140, it is possible to perform the above determination processing by accessing the memory 140 and comparing the data with the current connection state. If it is determined in step S1903 that the connection state with the public line 210 has changed from the connected state to the disconnected state, the process advances to step S1904; otherwise, the process advances to step S1905. In step S1904, the CPU 200 sets the timer value M2 in the timer circuit 124, and starts time measurement. This is done to allow the apparatus to shift to the power-off mode by measuring the time during which the communication line 130 is not connected to the public line 210. At this time, data indicating that the communication line 130 is not connected to the public line 210 is held in the memory 140. The process then returns to step S1805 (Fig. 18).

In step S1905, the CPU 200 determines whether the connection state between the communication line 130 and the public line 210 has changed from the disconnected state to the connected state. If the connection state has changed, the process advances to step S1906; otherwise, the process advances to step S1907. In step S1906, the CPU 200 clears the timer value M2 set in the timer circuit 124. This is done because the communication line 130 is connected to the public line 210 to eliminate the need to shift the apparatus to the power-off mode. At this time, data indicating that the communication line 130 and the public line 210 are connected to each other is held in the memory 140. The process then returns to step S1805 (Fig. 18).

In step S1907, since the connection state between the communication line 130 and the public line 210 has not changed, the CPU 200 controls the modem 102 to determine whether the change in voltage of the communication line 130 is caused by reception of a CI signal or the off-hook of the external telephone 128. If the change in voltage of the communication line 130 is caused by reception of a CI signal, the modem 102 turns on a CI signal detection flag. Alternatively, if the voltage of the communication line 130 falls within the range from the setting value A1 (inclusive) of the threshold voltage to the setting value A2 (inclusive) of the threshold voltage even though the SDAA 104 is not performing a DC capture operation, a flag indicating that the external telephone 128 is capturing the line is set in the register 206 of the modem 102. It is also possible to acquire the line voltage value by accessing the modem 102, and use it for the determination processing.

The process advances to step S1908, and the CPU 200 determines whether the CI signal has been detected. In step S1907, if the CI signal detection flag has been set in the modem 102, reception of the CI signal is determined, and thus the process advances to step S1911 and the CPU 200 performs facsimile reception processing. This processing is normal processing and a detailed description thereof will be omitted. Upon end of the reception processing, the processing by the CPU 200 advances to step S1805.

On the other hand, if reception of the CI signal is not determined in step S1908, the process advances to step S1909, and the CPU 200 determines whether the off-hook of the external telephone 128 has been detected. If the off-hook detection flag has been set in the modem 102 in the processing in step S1907, the change in voltage has been caused by the off-hook of the external telephone 128, and thus the process advances to step S1912. It is also possible to acquire the line voltage value by accessing the modem 102, and use it for the off-hook determination processing. In step S1912, the CPU 200 performs voice communication processing by the external telephone 128 of the facsimile. This is normal processing and a detailed description thereof will be omitted. Upon end of the voice communication processing, the processing by the CPU 200 advances to step S1805. If the CPU 200 determines in step S1909 that the change in voltage has not been caused by the off-hook of the external telephone 128, the process advances to step S1910. Processing in step S1910 is performed when NO is determined in steps S1903, S1905, S1908, and S1909. At this time, the CPU 200 determines that the change in voltage of the communication line 130 has been caused by noise, and the state of the communication line 130 has not changed, continues measurement of the timer value M2 by the timer circuit 124, and shifts the apparatus to the standby mode, thereby returning the process to step S1805.

In step S1914, the CPU 200 determines whether measurement of the timer values M1 and M2 are complete. The CPU 200 may perform the determination processing by accessing the timer circuit 124, or perform the determination processing by accessing the timer circuit 124 when the timer circuit 124 inputs the interrupt signal d7 to the SOC 101. As will be described later with reference to step S1915, data indicating whether measurement of the timer value M1 is complete may be held in the memory 140, and the determination processing may be performed based on the result of accessing the memory 140. If it is determined that measurement of the timer values M1 and M2 is complete, the process advances to step S1917. Processing in step S1917 is executed when the facsimile apparatus 1200 has not been operated and no job has been input for a given time, and it is determined that the communication line 130 and the public line 210 are not connected to each other. Therefore, in step S1917, after executing various termination processes, the CPU 200 changes the power supply output control signal 167 connected to the power supply circuit 125, and stops the power supply outputs 163 and 164 from the power supply circuit 125 to shift the apparatus to the power-off mode. Upon power-off, the CPU 200 is reset, and thus its operation is stopped, thereby terminating this processing. After that, the facsimile apparatus 1200 does not return until its power switch is manually turned on.

On the other hand, if it is determined in step S1914 that measurement of the timer values M1 and M2 is not complete, the process advances to step S1915, and the CPU 200 determines whether measurement of the timer value M1 is complete. At this time, the CPU 200 may perform the determination processing by accessing the timer circuit 124, or perform the determination processing by accessing the timer circuit 124 when the interrupt signal d7 is input to the SOC 101. Alternatively, the CPU 200 may access the timer circuit 124 when the interrupt signal d7 is input to the SOC 101, hold, in the memory 140, data indicating whether measurement of the timer value M1 is complete, and perform the determination processing based on the result of accessing the memory 140. If measurement of the timer value M1 is complete, the process advances to step S1916; otherwise, the process returns to step S1805 of Fig. 18.

Processing in step S1916 is executed when the facsimile apparatus 1200 satisfies a condition for shifting to the sleep mode. In step S1916, the CPU 200 executes processing of terminating various processes to shift the apparatus to the sleep mode. In the sleep mode, power is supplied to the modem 102 and SDAA 104 but the modem 102 and SDAA 104 are made to shift to the low power consumption mode in which only minimum processing is performed. To suppress the power consumption of the H-relay 110, the H-relay driving signal 111 is controlled to shift the apparatus to the ringing incoming call state in which the external telephone 128 and the communication line 130 are connected. The CPU 200 changes the power supply output control signal 167 connected from the power supply controller 207 to the power supply circuit 125 to stop the power supply output 164 from the power supply circuit 125. To reduce the power consumption, the state shifts to a state in which the CPU 200 itself is stopped until a signal is input from the power supply controller 207, thereby shifting the apparatus to the sleep mode. With this processing, the CPU 200 stops execution of the program until an interrupt signal is input to the power supply controller 207.

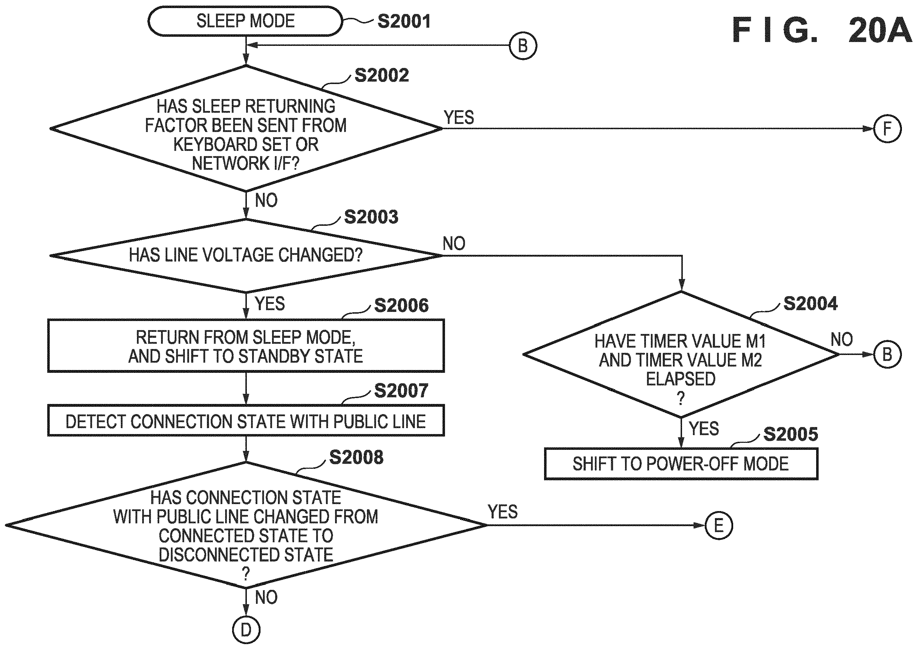

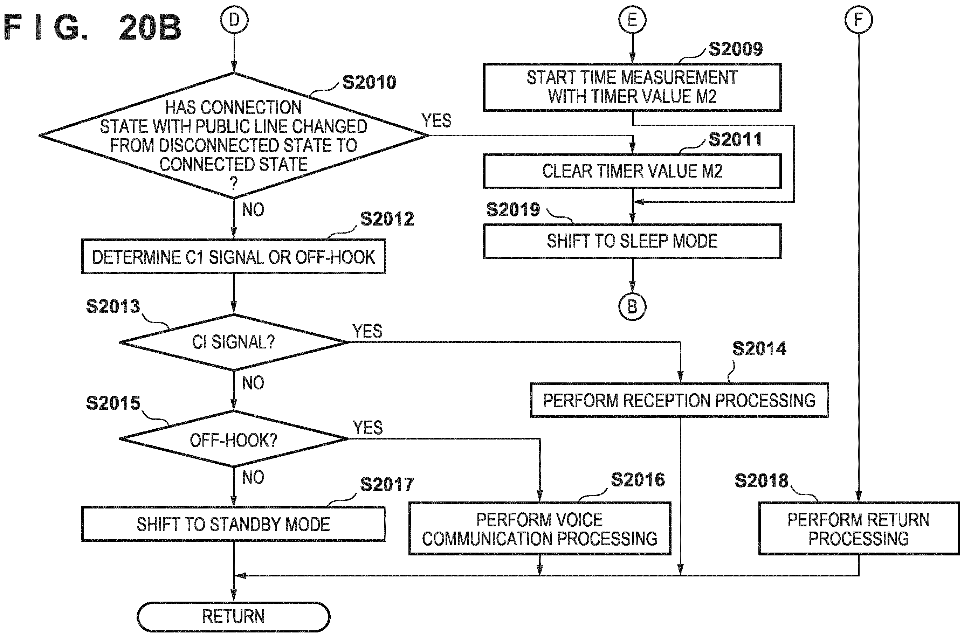

Figs. 20A and 20B are flowcharts for explaining processing when the facsimile apparatus 1200 shifts to the sleep mode in step S1916 of Fig. 19.

If the CPU 200 is stopped and cannot perform determination processing in the sleep mode, the power supply controller 207 performs determination processes in steps S2002, S2003, and S2004. Based on the presence/absence of an input interrupt signal, the power supply controller 207 determines whether to return the apparatus from the sleep mode. The power supply controller 207 may change processing depending on which of the interrupt signals d5, d6, d7, and d8 is input.

In step S2001, the CPU 200 and power supply controller 207 start the sleep mode. The processing by the CPU 200 and power supply controller 207 shifts to step S2002. In step S2002, the CPU 200 and power supply controller 207 determine whether a factor for returning from the sleep mode has been sent from the keyboard set 120 or the network I/F 127. If a user operation for the facsimile apparatus 1200 is performed or various jobs are input from the network I/F 127, the processing by the CPU 200 and power supply controller 207 advances to step S2018 to perform processing of returning from the sleep mode. In step S2018, the CPU 200 and power supply controller 207 execute processing of returning from the sleep mode to process the user operation or the input of various jobs from the network I/F 127. At this time, the power supply controller 207 notifies the CPU 200 that an interrupt signal has been generated. Upon detecting the occurrence of interruption, the CPU 200 returns from the stop state to restart execution of the program. After the CPU 200 returns from the stop state, it accesses the power supply controller 207 to confirm the interrupt factor, and then clears the factor. The CPU 200 confirms which of the circuits has generated the activation factor, and performs various initialization processes of, for example, returning the modem 102 to the normal state. After that, the CPU 200 controls the power supply controller 207 to change the power supply output control signal 167 and output (turn on) the power supply output 164 from the power supply circuit 125, thereby shifting the apparatus to the standby mode.

On the other hand, if it is determined in step S2002 that there is no factor for returning from the sleep mode, the process advances to step S2003, and the CPU 200 and power supply controller 207 determine whether the modem 102 has sent a factor for returning from the sleep mode, which is caused by a change in line voltage. When a CI signal is received from the public line 210 or the telephone 128 is off-hooked, the line voltage changes, the interrupt signal d5 is generated from the modem 102 to the power supply controller 207, and it is determined that the line voltage has changed. At this time, since the modem 102 is in the low power consumption state, it is impossible to determine whether the change in voltage has been caused by reception of the CI signal, off-hook, or a change in the connection to the public line 210 but it is possible to detect a change in the line voltage in the sleep mode in real time. If it is determined that the line voltage has changed, the processing by the CPU 200 and power supply controller 207 shifts to step S2006, thereby returning the apparatus from the sleep mode to the standby mode.

On the other hand, if it is determined in step S2003 that the line voltage has not changed, the processing by the CPU 200 and power supply controller 207 shifts to step S2004. In step S2004, the CPU 200 and power supply controller 207 determine whether measurement of the timer values M1 and M2 is complete. When the interrupt signal d7 is generated from the timer circuit 124 and input to the power supply controller 207, the power supply controller 207 determines that measurement of the timer value M2 has ended. When the power supply controller 207 notifies the CPU 200 that the interrupt signal has been generated, the CPU 200 detects the occurrence of interruption, and returns from the stop state to restart execution of the program. After the CPU 200 returns from the stop state, the CPU 200 accesses the power supply controller 207 to confirm an interrupt factor, and then clears the interrupt factor. The CPU 200 confirms which of the circuits has generated the activation factor. The CPU 200 accesses the timer circuit 124 to determine whether measurement of the timer value M2 has ended. At this time, the apparatus has shifted to the sleep mode, and measurement of the timer value M1 is complete. Alternatively, the CPU 200 may hold, in the memory 140, data indicating whether measurement of the timer values M1 and M2 is complete may be held, and access the memory 140 to perform the determination processing. If measurement of the timer values M1 and M2 is complete, the processing by the CPU 200 and power supply controller 207 shifts to step S2005. Processing in step S2005 is executed when the facsimile apparatus 1200 has not been operated and no job has been input for a given time, and it is determined that the communication line 130 and the public line 210 are not connected to each other. In step S2005, the CPU 200 controls the power supply controller 207 to turn on the power supply output 164 of the power supply circuit 125 using the power supply output control signal 167, thereby shifting the apparatus to the standby mode. After performing various termination processes, the CPU 200 outputs the power supply output control signal 167 to the power supply circuit 125, stops the power supply outputs 163 and 164 from the power supply circuit 125, and shifts the apparatus to the power-off mode. Upon power-off, the CPU 200 is reset, and thus its operation is stopped, thereby terminating the processing according to the flowchart. After that, the facsimile apparatus 1200 does not return until its power switch is manually turned on. If it is determined in step S2004 that the interrupt signal d7 from the timer circuit 124 has not changed, the processing by the CPU 200 and power supply controller 207 shifts to step S2002.

On the other hand, if it is determined in step S2003 that the line voltage has changed, the process advances to step S2006, and the CPU 200 and power supply controller 207 temporarily return the apparatus from the sleep mode to the standby mode to determine whether the facsimile apparatus 1200 is connected to the public line 210. With this processing, the power supply controller 207 notifies the CPU 200 by an interrupt signal, and the CPU 200 returns from the stop state by interruption to restart execution of the program, and performs various initialization processes of, for example, returning the modem 102 to the normal mode. After that, the CPU 200 supplies the power supply output control signal 167 to the power supply circuit 125, and turns on the power supply output 164 from the power supply circuit 125, thereby shifting the apparatus to the standby state. The processing by the CPU 200 shifts to step S2007.

In step S2007, the CPU 200 accesses the modem 102 to detect the connection state between the communication line 130 and the public line 210. At this time, when the CPU 200 accesses the modem 102, it can acquire the voltage value of the communication line 130 since the modem 102 has returned to the normal state, in addition to the flag indicating whether the communication line is connected to the public line 210 or that the external telephone 128 has been off-hooked. The process advances to step S2008, and the CPU 200 determines whether the connection state with the public line 210 has changed from the connected state to the disconnected state. Since data indicating whether the communication line 130 is connected to the public line 210 has been held in the memory 140 in step S1801, it is possible to perform the determination processing by accessing the data and comparing it with the current state. If it is determined that the connection state with the public line 210 has changed from the connected state to the disconnected state, the process advances to step S2009; otherwise, the process advances to step S2010. In step S2009, the CPU 200 sets the timer value M2 in the timer circuit 124, and starts time measurement. This is done to measure the time during which the communication line 130 is not connected to the public line. At this time, the CPU 200 holds, in the memory 140, data indicating that the communication line 130 is not connected to the public line 210, and executes processing of shifting the apparatus to the sleep mode in step S2019. When the connection state with the public line 210 changes to the disconnected state, the CPU 200 starts measurement of the time (timer value M2) for shifting to the power-off mode, thereby shifting the apparatus to the sleep mode.

In step S2010, the CPU 200 determines whether the connection state between the communication line 130 and the public line has changed from the disconnected state to the connected state. If the connection state has changed, the processing by the CPU 200 shifts to step S2011; otherwise, the processing by the CPU 200 shifts to step S2012. In step S2011, the CPU 200 clears the timer value M2 set in the timer circuit 124. This is done because the communication line 130 and the public line 210 are connected to each other to eliminate the need to shift apparatus to the power-off mode. At this time, data indicating that the communication line 130 and the public line 210 are connected to each other is held in the memory 140, and the process shifts to step S2019. In step S2019, the CPU 200 immediately shifts the apparatus to the sleep mode. To shift the apparatus to the sleep mode, the CPU 200 executes the same processing as that in step S1916. When the connection state with the public line 210 changes to the connected state, the CPU 200 stops measurement of the time (timer value M2) for shifting to the power-off mode, thereby shifting the apparatus to the sleep mode.

Note that advancing the process to step S2019 via step S2009 after YES is determined in step S2008 indicates that the connection state with the public line 210 has changed to the disconnected state in the sleep mode. Therefore, in this case, even if the apparatus temporarily returns to the standby state in step S2006, the process advances to step S2019 to immediately shift the apparatus to the sleep mode without standing by for measurement of the timer value M1. This can shorten the time until the apparatus shifts to the power-off mode, thereby suppressing the power consumption.

Advancing the process to step S2019 via step S2011 after YES is determined in step S2010 indicates that the communication line has been connected to the public line in the sleep mode. Therefore, even if the apparatus temporarily returns to the standby state in step S2006, the power consumption is suppressed by immediately shifting the apparatus to the sleep mode. After the processing in step S2019 is executed, the process returns to step S2002.

If it is determined in step S2010 that the connection state between the communication line 130 and the public line 210 has changed from the disconnected state to the connected state, the process advances to step S2012. Processing in step S2012 is executed when the line voltage changes due to a factor other than a change in the connection state between the communication line 130 and the public line 210. Therefore, in step S2012, the CPU 200 controls the modem 102 to determine whether a change in voltage of the communication line 130 indicates reception of the CI signal or the off-hook of the external telephone 128. If the change in voltage of the communication line 130 indicates reception of the CI signal, the modem 102 turns on the CI signal detection flag. Alternatively, if the voltage of the communication line 130 falls within the range from the setting value A1 (threshold) (inclusive) of the threshold voltage to the setting value A2 (threshold) (inclusive) although the SDAA 104 is not performing a DC capture operation, the modem 102 turns on the flag indicating that the external telephone 128 is capturing the line. At this time, since the modem 102 has returned to the normal state, it is also possible to acquire the line voltage value by accessing the model 102, and perform the determination processing. The processing by the CPU 200 shifts to step S2013.

In step S2013, the CPU 200 determines whether reception of the CI signal has been detected. If it is determined in step S2012 that the CI signal detection flag is ON in the modem 102, the processing by the CPU 200 advances to step S2014; otherwise, the processing by the CPU 200 shifts to step S2015. In step S2014, the CPU 200 executes facsimile reception processing, and terminates this processing upon completion of the facsimile reception processing. This is normal processing and a detailed description thereof will be omitted.

In step S2015, the CPU 200 determines whether the off-hook of the external telephone 128 has been detected. If it is determined in step S2012 that the off-hook detection flag is ON in the modem 102, the processing by the CPU 200 shifts to step S2016. At this time, it is possible to acquire the line voltage value by accessing the modem 102, and use it for the determination processing. In step S2016, the CPU 200 performs voice communication processing by the external telephone 128 of the facsimile, and terminates this processing upon completion of the voice communication processing. Note that this processing is normal processing and a detailed description thereof will be omitted.

If it is determined in step S2015 that the off-hook has not been detected, the processing by the CPU 200 shifts to step S2017. Processing in step S2017 is executed when NO is determined in steps S2008, S2010, S2013, and S2015. In step S2017, the CPU 200 determines that the change in voltage of the communication line 130 has been caused by noise, and the state of the communication line 130 has not changed, continues measurement of the timer value M2, and shifts the apparatus to the standby mode while maintaining the standby state.

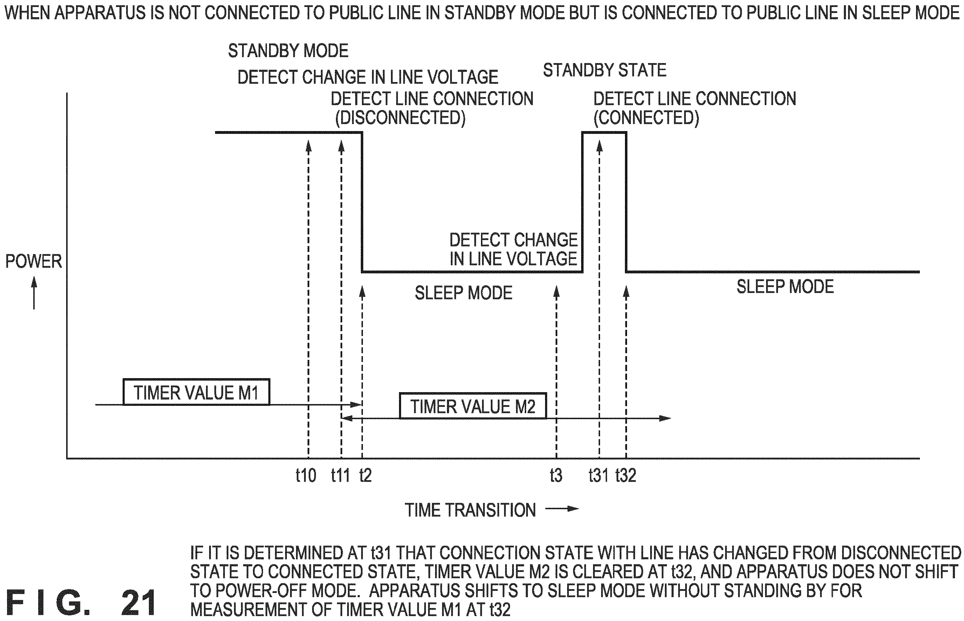

Fig. 21 is a timing chart showing an example of power transition of the facsimile apparatus 1200 according to the sixth embodiment.

Fig. 21 shows power transition when the line communication is not connected to the public line 210 in the standby mode but is connected to the public line 210 in the sleep mode. The correspondence with the main part in each step described with reference to Figs. 18 to 20 will be explained.

Upon detecting a change in line voltage at time t10 in the standby mode (which corresponds to YES in step S1901 of Fig. 19), the connection state with the public line 210 is detected at time t11 (step S1902). If it is determined that the connection state with the public line 210 has changed to the disconnected state in the standby mode, as compared with the previous state (which corresponds to YES in step S1903), the timer circuit 124 is activated with the timer value M2 (time t11, step S1904).

The apparatus shifts to the sleep mode at time t2 (which corresponds to YES in step S1915). Upon detecting a change in line voltage in the sleep mode at time t3 (which corresponds to YES in step S2003), the apparatus temporarily returns from the sleep mode to the standby mode (step S2006). The connection state with the public line 210 is detected at time t31 in the standby mode (step S2007). If it is determined that the connection state with the public line 210 has changed to the connected state, as compared with the previous state (YES in step S2010), measurement of the timer value M2 by the timer circuit 124 is stopped (step S2011). At time t32, the apparatus immediately shifts to the sleep mode (step S2019).

In the sixth embodiment, when the connection state with the public line 210 changes to the connected state, measurement of the time for shifting to the power-off mode is stopped, and thus it is possible to prevent the apparatus from shifting to the power-off mode even in the sleep mode when the communication line is connected to the public line.

Immediately shifting the apparatus to the sleep mode at time t32 without standing by for measurement of the timer value M1 can shorten the time of the standby mode, thereby reducing the power consumption.

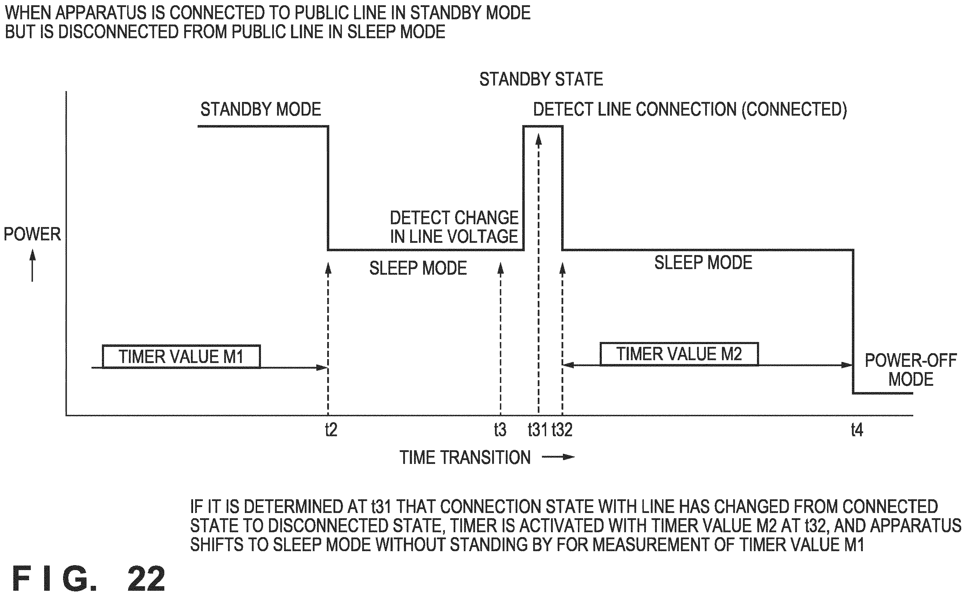

Fig. 22 is a timing chart showing another example of power transition of the facsimile apparatus 1200 according to the sixth embodiment.

Fig. 22 shows power transition when the communication line is connected to the public line 210 in the standby mode but is disconnected from the public line 210 in the sleep mode. The correspondence with the main part in each step described with reference to Figs. 18 to 20 will be explained.

The apparatus shifts to the sleep mode at time t2 (which corresponds to YES in step S1915). Upon detecting a change in line voltage of the communication line 130 at time t3 in the sleep mode (which corresponds to YES in step S2003), the apparatus temporarily returns from the sleep mode to the standby state (step S2006). The connection state with the public line 210 is detected at time t31 in the standby mode (step S2007). At time t32, if it is determined that the connection to the public line 210 has changed to the disconnected state as compared with the previous state in the sleep mode (which corresponds to YES in step S2008), the timer value M2 is set in the timer circuit 124 to start time measurement (step S2009). The apparatus immediately shifts to the sleep mode (step S2019).

Since this starts time measurement with the timer value M2 at time t32, time measurement can start when it is determined that the connection state with the public line 210 has changed to the disconnected state in the sleep mode, and the apparatus can shift to the power-off mode at time t4. At time t32, the apparatus immediately shifts to the sleep mode without standing by for measurement of the timer value M1.

As described above, in the sixth embodiment, when the connection state with the public line 210 changes to the disconnected state, the time for shifting to the power-off mode immediately starts to be measured. Therefore, even in the sleep mode, when a predetermined time is measured, the apparatus can shift to the power-off mode.

Immediately shifting the apparatus to the sleep mode without standing by for measurement of the timer value M1 at time 32 can shorten the time of the standby mode, thereby reducing the power consumption.

In the aforementioned sixth embodiment, a case in which power management is controlled based on the connection state between the communication line 130 and the public line 210 has been described. The presence/absence of the connection to the LAN 240 has not been specifically described but the same control operation as that for the connection state with the line can be performed based on the presence/absence of the connection to the LAN 240. This means that the above-described sixth embodiment is applied regardless of connection/disconnection to/from the LAN 240.

As described above, since the network I/F 127 belongs to the first power supply system circuit 1601, and is thus supplied with power even in the sleep mode, it is possible to accept a reception packet from the LAN 240 in the sleep mode. Therefore, by detecting whether the link with the LAN 240 has been established even in the sleep mode, it is possible to detect the connection state with the LAN 240.

### Seventh Embodiment

The seventh embodiment of the present invention will be described. By detecting the connection state with a LAN 240, it is possible to prevent a facsimile apparatus 1200 from shifting to the power-off mode when it is connected to the LAN 240. Note that the arrangement of the facsimile apparatus according to the seventh embodiment is the same as in the above-described sixth embodiment and a description thereof will be omitted.

In the seventh embodiment, when it is determined that the apparatus is connected to the LAN 240, time measurement with a timer value M2 is cleared, and time measurement with the timer value M2 starts only after the apparatus is disconnected from the LAN 240. More specifically, when the apparatus is connected to the LAN 240, it is limited not to execute activation setting processing of measuring the timer value M2 in the flowcharts shown in Figs. 18 to 20. With this operation, since the apparatus shifts to the power-off mode before a print job is input from the LAN 240, it is possible to avoid a situation in which it is necessary to manually turn on the power switch of the facsimile apparatus.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A communication apparatus capable of being connected to a plurality of lines to perform communication shifts to a sleep mode when a condition for shifting to the sleep mode is satisfied, and measures a time during which the sleep mode continues. The communication apparatus returns from the sleep mode when the measured time reaches a predetermined time, and determines whether it is connected to at least one of the plurality of lines. If it is determined that the communication apparatus is connected to at least one of the plurality of lines, the communication apparatus is not powered off.

## Claims

1. A communication apparatus (100) capable of being connected to a line (210) to perform communication, comprising:
shifting means (101, 125) for shifting the communication apparatus to a sleep state when a condition for shifting to the sleep state is satisfied;
timer means (124) for measuring a time during which the sleep state continues; and
determination means (200) for returning, when the time measured by the timer means (124) reaches a predetermined time, the communication apparatus (100) from the sleep state, and determining whether the communication apparatus (100) is connected to the line (210);
**characterized in**
control means (200) for controlling not to power off the communication apparatus (100) if the determination means (200) determines that the communication apparatus (100) is connected to the line (210), and to power off the communication apparatus (100) if the determination means (200) determines that the communication apparatus (100) is not connected to the line (210).

2. The apparatus (100) according to claim 1, wherein if the determination means (200) determines that the communication apparatus (100) is connected to the line (210), the control means (200) controls to shift the communication apparatus (100) to the sleep state.

3. The apparatus (100) according to claim 1 or 2, further comprising:
a first power supply system circuit (4001) configured to be supplied with power even in the sleep state; and
a second power supply system circuit (4002, 4003) configured not to be supplied with power in the sleep state,
wherein the timer means (124) is included in the first power supply system circuit (4001).

4. The apparatus (100) according to claim 3, wherein
the line (210) is a LAN or a public line, and
the first power supply system circuit (4001) detects a connection to the LAN, and the second power supply system circuit (4001, 4002) detects a connection to the public line.

5. The apparatus (100) according to claim 4, wherein
if the determination means (200) determines that the communication apparatus (100) is connected to the LAN, the control means (200) causes stop of measurement by the timer means (124), and shifts the communication apparatus (100) to the sleep state without powering off the communication apparatus (100), and
if the first power supply system circuit (4001) configured to detect the connection to the LAN detects that the communication apparatus (100) is disconnected from the LAN, the control means (200) returns the communication apparatus (100) from the sleep state, and causes the determination means (200) to determine whether the communication apparatus (100) is connected to the public line, and if the determination means (200) determines that the communication apparatus (100) is connected to the public line, the control means (200) controls to shift the communication apparatus (100) to the sleep state without powering off the communication apparatus (100).

6. The apparatus (100) according to claim 5, wherein if the determination means (200) determines that the communication apparatus (100) is not connected to the public line, the control means (200) controls to power off the communication apparatus (100).

7. The apparatus (100) according to any one of claims 1 to 6, further comprising:
setting means for setting a priority order which is used by the determination means (200) to determine a connection to each of a plurality of lines (210),
wherein according to the priority order, the determination means (200) determines whether the communication apparatus (100) is connected to at least one of the plurality of lines (210).

8. The apparatus (100) according to any one of claims 1 to 7, wherein
the predetermined time is a time during which the sleep state continues until the communication apparatus (100) shifts from the sleep state to a power-off mode, and
the communication apparatus (100) further comprises time setting means (200) for shortening the predetermined time as an elapsed time after the communication apparatus (100) is installed and starts to be used is longer.

9. The apparatus (100) according to any one of claims 1 to 8, further comprising:
selection means (119) for prompting a user to select one of a plurality of lines (210) for which the determination means (200) determines whether the communication apparatus (100) is connected.

10. A control method for a communication apparatus (100) capable of being connected to a line (210) to perform communication, comprising:
shifting the communication apparatus to a sleep state when a condition for shifting to the sleep state is satisfied;
measuring a time during which the sleep state continues; and
returning (S601, S602), when the measured time reaches a predetermined time, the communication apparatus from the sleep state, and determining (S603, S605) whether the communication apparatus is connected to the line;
**characterized in**
controlling (S605, S606, S607) not to power off the communication apparatus if it is determined in the determining that the communication apparatus is connected to the line, and to power off the communication apparatus if it is determined in the determining that the communication apparatus is connected to none of the plurality of lines.

## Patentansprüche

1. Kommunikationsvorrichtung (100), die dazu in der Lage ist, mit einer Leitung (210) verbunden zu sein, um Kommunikation durchzuführen, mit
einer Verschiebeeinrichtung (101, 125) zum Verschieben der Kommunikationsvorrichtung in einen Schlafzustand, wenn eine Bedingung zum Verschieben in den Schlafzustand erfüllt ist,
einer Zeiteinrichtung (124) zur Messung einer Zeit, während der der Schlafzustand fortgesetzt ist, und
einer Bestimmungseinrichtung (200) zum Zurückbringen der Kommunikationsvorrichtung (100), wenn die durch die Zeiteinrichtung (124) gemessene Zeit eine vorbestimmte Zeit erreicht, von dem Schlafzustand, und zur Bestimmung, ob die Kommunikationsvorrichtung (100) mit der Leitung (210) verbunden ist,
**gekennzeichnet durch**
eine Steuereinrichtung (200) zur Steuerung, die Kommunikationsvorrichtung (100) nicht auszuschalten, wenn die Bestimmungseinrichtung (200) bestimmt, dass die Kommunikationsvorrichtung (100) mit der Leitung (210) verbunden ist, und die Kommunikationsvorrichtung (100) auszuschalten, wenn die Bestimmungseinrichtung (200) bestimmt, dass die Kommunikationsvorrichtung (100) nicht mit der Leitung (210) verbunden ist.

2. Vorrichtung (100) nach Anspruch 1, wobei, wenn die Bestimmungseinrichtung (200) bestimmt, dass die Kommunikationsvorrichtung (100) mit der Leitung (210) verbunden ist, die Steuereinrichtung (200) steuert, die Steuervorrichtung (100) in den Schlafzustand zu verschieben.

3. Vorrichtung (100) nach Anspruch 1 oder 2, ferner mit
einem ersten Energieversorgungssystemschaltkreis (4001), der dazu eingerichtet ist, um selbst in dem Schlafzustand mit Energie versorgt zu sein, und
einem zweiten Energieversorgungssystemschaltkreis (4002, 4003), der dazu eingerichtet ist, um in dem Schlafzustand nicht mit Energie versorgt zu sein,
wobei die Zeiteinrichtung (124) von dem ersten Energieversorgungssystemschaltkreis (4001) umfasst ist.

4. Vorrichtung (100) nach Anspruch 3, wobei
die Leitung (210) ein LAN oder eine Fernmeldeleitung ist, und
der erste Energieversorgungssystemschaltkreis (4001) eine Verbindung zu dem LAN erfasst, und der zweite Energieversorgungssystemschaltkreis (4001, 4002) eine Verbindung zu der Fernmeldeleitung erfasst.

5. Vorrichtung (100) nach Anspruch 4, wobei
wenn die Bestimmungseinrichtung (200) bestimmt, dass die Kommunikationsvorrichtung (100) zu dem LAN verbunden ist, die Steuereinrichtung (200) ein Anhalten einer Messung durch die Zeiteinrichtung (124) verursacht und die Kommunikationsvorrichtung (100) in den Schlafzustand verschiebt, ohne die Kommunikationsvorrichtung (100) auszuschalten, und
wenn der erste Energieversorgungssystemschaltkreis (4001), der konfiguriert ist, um die Verbindung zu dem LAN zu erfassen, erfasst, dass die Kommunikationsvorrichtung (100) von dem LAN getrennt ist, die Steuereinrichtung (200) die Kommunikationsvorrichtung (100) von dem Schlafzustand zurückbringt und die Bestimmungseinrichtung (200) dazu bringt, zu bestimmen, ob die Kommunikationsvorrichtung (100) mit der Fernmeldeleitung verbunden ist, und wenn die Bestimmungseinrichtung (200) bestimmt, dass die Kommunikationsvorrichtung (100) mit der Fernmeldeleitung verbunden ist, die Steuereinrichtung (200) steuert, die Kommunikationsvorrichtung (100) in den Schlafzustand zu verschieben, ohne die Kommunikationsvorrichtung (100) auszuschalten.

6. Vorrichtung (100) nach Anspruch 5, wobei, wenn die Bestimmungseinrichtung (200) bestimmt, dass die Kommunikationsvorrichtung (100) nicht mit der Fernmeldeleitung verbunden ist, die Steuereinrichtung (200) steuert, die Kommunikationsvorrichtung (100) auszuschalten.

7. Vorrichtung (100) nach einem der Ansprüche 1 bis 6, ferner mit
einer Einstelleinrichtung zur Einstellung einer Prioritätsreihenfolge, die durch die Bestimmungseinrichtung (200) verwendet wird, um eine Verbindung zu jeder aus einer Vielzahl von Leitungen (210) zu bestimmen,
wobei gemäß der Prioritätsreihenfolge die Bestimmungseinrichtung (200) bestimmt, ob die Kommunikationsvorrichtung (100) mit zumindest einer aus der Vielzahl von Leitungen (210) verbunden ist.

8. Vorrichtung (100) nach einem der Ansprüche 1 bis 7, wobei
die vorbestimmte Zeit eine Zeit ist, während der der Schlafzustand fortgesetzt ist, bis die Kommunikationsvorrichtung (100) von dem Schlafzustand in eine Ausschaltbetriebsart übergeht, und
die Kommunikationsvorrichtung (100) ferner eine Zeiteinstelleinrichtung (200) umfasst zur Verkürzung der vorbestimmten Zeit, wenn eine verstrichene Zeit, nachdem die Kommunikationsvorrichtung (100) installiert ist und beginnt, verwendet zu werden, länger ist.

9. Vorrichtung (100) nach einem der Ansprüche 1 bis 8, ferner mit
einer Auswahleinrichtung (119), um einen Benutzer aufzufordern, eine aus einer Vielzahl von Leitungen (210) auszuwählen, für die die Bestimmungseinrichtung (200) bestimmt, ob die Kommunikationsvorrichtung (100) verbunden ist.

10. Steuerverfahren für eine Kommunikationsvorrichtung (100), die dazu in der Lage ist, mit einer Leitung (210) verbunden zu sein, um Kommunikation durchzuführen, mit
einem Verschieben der Kommunikationsvorrichtung in einen Schlafzustand, wenn eine Bedingung zum Verschieben in den Schlafzustand erfüllt ist,
einem Messen einer Zeit, während der der Schlafzustand fortgesetzt wird, und
einem Zurückbringen (S601, S602) der Kommunikationsvorrichtung, wenn die gemessene Zeit eine vorbestimmte Zeit erreicht, von dem Schlafzustand, und einem Bestimmen (S603, S605), ob die Kommunikationsvorrichtung mit der Leitung verbunden ist,
**gekennzeichnet durch**
ein Steuern (S605, S606, S607), die Kommunikationsvorrichtung nicht auszuschalten, wenn bei dem Bestimmen bestimmt wird, dass die Kommunikationsvorrichtung mit der Leitung verbunden ist, und die Kommunikationsvorrichtung auszuschalten, wenn bei dem Bestimmen bestimmt wird, dass die Kommunikationsvorrichtung mit keiner der Vielzahl von Leitungen verbunden ist.

## Revendications

1. Appareil de communication (100) pouvant être connecté à une ligne (210) pour réaliser une communication, comprenant :
un moyen de commutation (101, 125) pour commuter l'appareil de communication vers un état de veille lorsqu'une condition pour commuter vers l'état de veille est remplie ;
un moyen de minuterie (124) pour mesurer une durée pendant laquelle l'état de veille se poursuit ; et
un moyen de détermination (200) pour faire sortir, lorsque la durée mesurée par le moyen de minuterie (124) a atteint une durée prédéterminée, l'appareil de communication (100) de l'état de veille, et déterminer si l'appareil de communication (100) est connecté à la ligne (210) ;
**caractérisé par** :
un moyen de commande (200) pour commander de ne pas couper l'alimentation de l'appareil de communication (100) si le moyen de détermination (200) détermine que l'appareil de communication (100) est connecté à la ligne (210), et pour couper l'alimentation de l'appareil de communication (100) si le moyen de détermination (200) détermine que l'appareil de communication (100) n'est pas connecté à la ligne (210).

2. Appareil (100) selon la revendication 1, dans lequel, si le moyen de détermination (200) détermine que l'appareil de communication (100) est connecté à la ligne (210), le moyen de commande (200) commande de commuter l'appareil de communication (100) vers l'état de veille.

3. Appareil (100) selon la revendication 1 ou 2, comprenant en outre :
un premier circuit de système d'alimentation en énergie (4001) configuré pour être alimenté en énergie y compris dans l'état de veille ; et
un second circuit de système d'alimentation en énergie (4002, 4003) configuré pour ne pas être alimenté en énergie dans l'état de veille,
dans lequel le moyen de minuterie (124) est inclus dans le premier circuit de système d'alimentation en énergie (4001).

4. Appareil (100) selon la revendication 3, dans lequel :
la ligne (210) est un réseau local ou une ligne publique, et
le premier circuit de système d'alimentation en énergie (4001) détecte une connexion au réseau local, et le second circuit de système d'alimentation en énergie (4001, 4002) détecte une connexion à la ligne publique.

5. Appareil (100) selon la revendication 4, dans lequel :
si le moyen de détermination (200) détermine que l'appareil de communication (100) est connecté au réseau local, le moyen de commande (200) provoque un arrêt du mesurage par le moyen de minuterie (124), et commute l'appareil de communication (100) vers l'état de veille sans couper l'alimentation de l'appareil de communication (100), et
si le premier circuit de système d'alimentation en énergie (4001) configuré pour détecter la connexion au réseau local détecte que l'appareil de communication (100) est déconnecté du réseau local, le moyen de commande (200) fait sortir l'appareil de communication (100) de l'état de veille, et amène le moyen de détermination (200) à déterminer si l'appareil de communication (100) est connecté à la ligne publique, et si le moyen de détermination (200) détermine que l'appareil de communication (100) est connecté à la ligne publique, le moyen de commande (200) commande de commuter l'appareil de communication (100) vers l'état de veille sans couper l'alimentation de l'appareil de communication (100).

6. Appareil (100) selon la revendication 5, dans lequel, si le moyen de détermination (200) détermine que l'appareil de communication (100) n'est pas connecté à la ligne publique, le moyen de commande (200) commande de couper l'alimentation de l'appareil de communication (100).

7. Appareil (100) selon l'une quelconque des revendications 1 à 6, comprenant en outre :
un moyen de réglage pour régler un ordre de priorité qui est utilisé par le moyen de détermination (200) pour déterminer une connexion à chacune d'une pluralité de lignes (210),
dans lequel, en fonction de l'ordre de priorité, le moyen de détermination (200) détermine si l'appareil de communication (100) est connecté à au moins l'une de la pluralité de lignes (210).

8. Appareil (100) selon l'une quelconque des revendications 1 à 7, dans lequel :
la durée prédéterminée est une durée pendant laquelle l'état de veille se poursuit jusqu'à ce que l'appareil de communication (100) commute depuis l'état de veille vers un mode où l'alimentation est coupée, et
l'appareil de communication (100) comprenant en outre un moyen de réglage de la durée (200) pour raccourcir la durée prédéterminée dès lors qu'une durée écoulée après que l'appareil de communication (100) a été installé et a commencé à être utilisé est plus longue.

9. Appareil (100) selon l'une quelconque des revendications 1 à 8, comprenant en outre :
un moyen de sélection (119) pour inviter un utilisateur à sélectionner l'une d'une pluralité de lignes (210) pour lesquelles le moyen de détermination (200) détermine si l'appareil de communication (100) est connecté.

10. Procédé de commande pour un appareil de communication (100) pouvant être connecté à une ligne (210) pour réaliser une communication, comprenant :
la commutation de l'appareil de communication vers un état de veille lorsqu'une condition pour commuter vers l'état de veille est remplie ;
la mesure d'une durée pendant laquelle l'état de veille se poursuit ; et
le fait de faire sortir (S601, S602), lorsque la durée mesurée a atteint une durée prédéterminée, l'appareil de communication de l'état de veille, et le fait de déterminer (S603, S605) si l'appareil de communication est connecté à la ligne ;
**caractérisé par** :
la commande (S605, S606, S607) de ne pas couper l'alimentation de l'appareil de communication s'il est déterminé au cours de la détermination que l'appareil de communication est connecté à la ligne, et de couper l'alimentation de l'appareil de communication s'il est déterminé au cours de la détermination que l'appareil de communication n'est connecté à aucune de la pluralité de lignes.
